# EUROPEAN PATENT APPLICATION

(11) **EP 4 044 667 A1**
(43) Date of publication of application: **17.08.2022**
(21) Application number: 19947759.7
(22) Date of filing: 30.09.2019
(51) Int. Cl.: H04W 28/04, H04W 72/10

(54) **FEEDBACK INFORMATION TRANSMISSION METHOD AND APPARATUS**

(71) Applicant: Huawei Technologies Co., Ltd., Longgang Shenzhen, Guangdong 518129 (CN)
(72) Inventor: HUANG, Haining, Shenzhen, Guangdong 518129 (CN); LI, Chao, Shenzhen, Guangdong 518129 (CN)
(74) Representative: Körber, Martin Hans
(86) International application number: PCT/CN2019/109729
(87) International publication number: WO 2021/062804

(57) **Abstract**

This application provides a feedback information transmission method and apparatus, and may be applied to systems such as the Internet of vehicles, V2X, and V2V The method includes: obtaining, by a first terminal device, a first resource used to transmit a sidelink HARQ and a second resource used to transmit a downlink HARQ, where the sidelink HARQ is a HARQ corresponding to sidelink data sent by the first terminal device, and the downlink HARQ is a HARQ corresponding to downlink data that is received by the first terminal device from a network device; and when the first resource and the second resource overlap in time domain, sending feedback information to the network device on a third resource based on a priority of the sidelink HARQ and a first threshold, where the feedback information includes the sidelink HARQ and/or the downlink HARQ, and the first threshold may be used to represent a priority of a downlink service type. According to the feedback information transmission method provided in this application, normal operation of a HARQ feedback mechanism is ensured, and data transmission reliability is improved.

## Description

### TECHNICAL FIELD

This application relates to the communications field, and more specifically, to a feedback information transmission method and apparatus.

### BACKGROUND

Vehicle to another device (vehicle to everything, V2X) communication is an important key technology for implementing environment perception and information exchange in the Internet of vehicles. A communications link between different user terminal devices may be referred to as a sidelink (sidelink, SL). Vehicle to another entity (entity) communication (vehicle-to-everything, V2X) may be performed by using a sidelink. V2X communication may be considered as a special case of device-to-device (device to device, D2D) communication. A communications link between different user terminal devices may be referred to as an SL. For example, a communications link between vehicles may be an SL. In a V2X communications system, a physical sidelink control channel (physical sidelink control channel, PSCCH) is used to transmit control information in V2X communication, and a physical sidelink shared channel (physical sidelink shared channel, PSSCH) is used to transmit data in V2X communication.

On a sidelink, a terminal device (briefly referred to as a receiving device) that receives sidelink data also feeds back, by using a hybrid automatic repeat request (hybrid automatic repeat request, HARQ) mechanism to a terminal device (briefly referred to as a sending device) that sends the sidelink data, whether the sidelink data is correctly received. The receiving device sends a HARQ (which may also be referred to as HARQ information) to the sending device. The HARQ may include a negative acknowledgment (negative acknowledgment, NACK) and/or an acknowledgment (acknowledgement, ACK). The sending device may feed back a HARQ for a sidelink to a network device, so that the network device allocates a retransmission resource.

The sending device may not only need to feed back, to the network device, a downlink HARQ corresponding to downlink data sent by the network device to the sending device, but also need to feed back, to the network device, a sidelink HARQ corresponding to sidelink data (for example, a PSSCH). Because both the downlink HARQ and the sidelink HARQ need to be sent to the network device by using a physical uplink control channel (physical uplink control channel, PUCCH) resource, a problem that a PUCCH for sending the downlink HARQ and a PUCCH resource for sending the sidelink HARQ overlap (overlap) in time domain may be caused, and a resource conflict is caused. Consequently, feedback information (the downlink HARQ and the sidelink HARQ) is affected, normal operation of a HARQ feedback mechanism cannot be ensured, data transmission reliability is reduced, and communication efficiency is reduced.

### SUMMARY

This application provides a feedback information transmission method and apparatus. A threshold is compared with a priority of a sidelink HARQ, and the threshold may be used to represent a priority of a downlink service type. Feedback information transmitted on a third resource is determined based on a comparison result, and the feedback information includes a HARQ and/or a downlink HARQ. This can ensure normal operation of a HARQ feedback mechanism and improve data transmission reliability.

According to a first aspect, a feedback information transmission method is provided. The method may be performed by a first terminal device, or may be performed by a chip used in a first terminal device. An example in which the method is performed by the first terminal device is used. The method includes: obtaining, by the first terminal device, a first resource used to transmit a sidelink HARQ and a second resource used to transmit a downlink HARQ, where the sidelink HARQ is a HARQ corresponding to sidelink data sent by the first terminal device, and the downlink HARQ is a HARQ corresponding to downlink data that is received by the first terminal device from a network device; and
when the first resource and the second resource overlap in time domain, sending, by the first terminal device, feedback information to the network device on a third resource based on a priority of the sidelink HARQ and a first threshold, where the feedback information includes the sidelink HARQ and/or the downlink HARQ, and the third resource is determined based on the first resource and the second resource.

According to the feedback information transmission method provided in the first aspect, when the resource for transmitting the sidelink HARQ and the resource for transmitting the downlink HARQ overlap in time domain, the threshold is compared with the priority of the sidelink HARQ, and the threshold is used to represent a priority of a downlink service type. Different downlink service types may correspond to different thresholds. The feedback information transmitted on the third resource is determined based on a comparison result. The feedback information of the third resource may be a multiplexing of the sidelink HARQ and the downlink HARQ or one of the sidelink HARQ and the downlink HARQ. This can ensure normal operation of a HARQ feedback mechanism and improve data transmission reliability.

In a possible implementation of the first aspect, the priority of the sidelink HARQ is a priority of the first resource, or the priority of the sidelink HARQ is a priority of the sidelink data corresponding to the sidelink HARQ, or the priority of the sidelink HARQ is a priority of a PSSCH corresponding to the sidelink HARQ, or the priority of the sidelink HARQ is a value of a priority field in SCI for scheduling the sidelink data, or the priority of the sidelink HARQ is a priority of a channel for transmitting the sidelink HARQ, or the priority of the sidelink HARQ is a priority of sidelink transmission corresponding to the sidelink HARQ.

In a possible implementation of the first aspect, when there are a plurality of pieces of data corresponding to the sidelink HARQ, the priority of the sidelink HARQ is a priority of data with a highest priority in the plurality of pieces of data.

In a possible implementation of the first aspect, the method further includes: determining, by the first terminal device, the first threshold from at least one threshold based on a service type of the downlink data, where the at least one threshold corresponds to different service types.

In a possible implementation of the first aspect, the sending, by the first terminal device, feedback information to the network device on a third resource based on a priority of the sidelink HARQ and a first threshold includes:
when the priority of the sidelink HARQ is less than or equal to the first threshold, sending, by the first terminal device, only the downlink HARQ to the network device on the third resource; or when the priority of the sidelink HARQ is greater than the first threshold, sending, by the first terminal device, only the sidelink HARQ to the network device on the third resource. In this implementation, it can be ensured that a HARQ corresponding to service data with a high priority is normally fed back, thereby ensuring transmission reliability of the service data with the high priority.

In a possible implementation of the first aspect, the sending, by the first terminal device, feedback information to the network device on a third resource based on a priority of the sidelink HARQ and a first threshold includes:
when the priority of the sidelink HARQ is greater than the first threshold, sending, by the first terminal device, the sidelink HARQ and the downlink HARQ to the network device on the third resource; or when the priority of the sidelink HARQ is less than or equal to the first threshold, sending, by the first terminal device, only the downlink HARQ to the network device on the third resource. In this implementation, different thresholds are configured for downlink service types with different priorities, so that transmission reliability and a transmission latency of an uplink service with a high priority can be ensured. When the first resource and the second resource overlap, this ensures that a HARQ feedback mechanism of at least one of a sidelink and a downlink normally operates, and improves data transmission reliability of the at least one of the sidelink and the downlink.

According to a second aspect, a feedback information transmission method is provided. The method may be performed by a first terminal device, or may be performed by a chip used in a first terminal device. An example in which the method is performed by the first terminal device is used. The method includes: determining, by the first terminal device based on a first time domain offset set, a second time domain resource set corresponding to a first time domain resource, where the first time domain resource is a time domain resource that can be used by the first terminal device to send a hybrid automatic repeat request HARQ to a network device, and the HARQ includes a sidelink HARQ corresponding to sidelink data sent by the first terminal device;
determining, by the first terminal device, a third time domain resource set from the second time domain resource set, where a time domain resource in the third time domain resource set is a candidate time domain resource used to send the sidelink data; and
determining, by the first terminal device, the HARQ based on the third time domain resource set.

According to the feedback information determining method provided in the second aspect, all time domain resources that may be used to send the sidelink data are determined based on the first time domain offset set and an uplink time domain resource that may be used to send the sidelink HARQ, corresponding HARQ bit positions are reserved for all the sidelink data that may be sent, and all possible sidelink HARQs are jointly used to generate a semi-static HARQ codebook, to ensure that all the possible sidelink HARQs can be normally fed back. This can resolve a problem of a resource conflict when one sending device needs to send a plurality of sidelink HARQs on a plurality of resources, improve spectrum utilization, and improve data transmission reliability. In addition, bits are semi-statically reserved for each possible sidelink transmission, to ensure that the network device and the first terminal device have a consistent understanding of the sidelink HARQ, and no confusion occurs.

In a possible implementation of the second aspect, the first time domain offset set is a set of time domain offsets between the first time domain resource and a time domain resource occupied by the sidelink data; and
the determining, by the first terminal device based on a first time domain offset set, a second time domain resource set corresponding to a first time domain resource includes: determining, by the first terminal device, the second time domain resource set based on the time domain offsets included in the first time domain offset set and the first time domain resource. In this implementation, the second time domain resource set is determined by using the set of time domain offsets between the first time domain resource and the time domain resource occupied by the sidelink data. This can improve efficiency of determining the second time domain resource set, provide easy implementation and low complexity, and improve accuracy of the second time domain set.

In a possible implementation of the second aspect, the first time domain offset set is a set of time domain offsets between the first time domain resource and a time domain resource of the sidelink HARQ, and the time domain resource of the sidelink HARQ is a time domain resource on which the first terminal device receives the sidelink HARQ; and
the determining, by the first terminal device based on a first time domain offset set, a second time domain resource set corresponding to a first time domain resource includes: determining, by the first terminal device based on the time domain offsets included in the first time domain offset set and the first time domain resource, time domain resources of a plurality of sidelink HARQs; and determining, by the first terminal device, the second time domain resource set from the time domain resources of the plurality of sidelink HARQs based on a first parameter, where the first parameter includes a resource feedback periodicity and a time domain offset between the time domain resource of the sidelink data and the time domain resource of the sidelink HARQ. In this implementation, the second time domain resource set is determined by using the first parameter and the set of time domain offsets between the first time domain resource and the time domain resource of the sidelink HARQ. This can improve efficiency of determining the second time domain resource set and improve accuracy of the second time domain set.

In a possible implementation of the second aspect, the first time domain offset set is a set of time domain offsets between the first time domain resource and a time domain resource occupied by downlink control information for scheduling a sidelink resource, the sidelink resource is used by the first terminal device to send the sidelink data, and the determining, by the first terminal device based on a first time domain offset set, a second time domain resource set corresponding to a first time domain resource includes: determining, by the first terminal device based on the time domain offsets included in the first time domain offset set and the first time domain resource, time domain resources occupied by a plurality of pieces of downlink control information for scheduling the sidelink resource; and determining, by the first terminal device based on a second parameter, the second time domain resource set from the time domain resources occupied by the plurality of pieces of control information, where the second parameter is a time domain offset between a time domain resource of the sidelink data and the time domain resource occupied by the downlink control information. The second time domain resource set is determined by using the second parameter and the set of time domain offsets between the first time domain resource and the time domain resource occupied by the downlink control information for scheduling the sidelink resource. This can improve efficiency of determining the second time domain resource set and improve accuracy of the second time domain set.

In a possible implementation of the second aspect, the determining, by the first terminal device, a third time domain resource set from the second time domain resource set includes: determining, by the first terminal device, the third time domain resource set from the second time domain resource set based on a frame structure configuration of a time domain resource included in the second time domain resource set. In this implementation, the third time domain resource set is determined from the second time domain resource set by using the frame structure configuration. This can improve efficiency of determining the third time domain resource set and improve accuracy of the third time domain set.

In a possible implementation of the second aspect, the HARQ further includes a downlink HARQ corresponding to downlink data, and the downlink data is data that is received by the first terminal device from the network device; and
the method further includes: determining, by the first terminal device based on a second time domain offset set, a fourth time domain resource set corresponding to the first time domain resource, where the fourth time domain resource set includes a plurality of candidate time domain resources used to transmit the downlink data, and the downlink data is the data that is received by the first terminal device from the network device; and the determining, by the first terminal device, the HARQ based on the third time domain resource set includes: determining, by the first terminal device, the HARQ based on the third time domain resource set and the fourth time domain resource set.

In this implementation, all time domain resources that may be used to send the sidelink data are determined based on different time domain offset sets and the first time domain resource used to send the sidelink HARQ, corresponding HARQ bits are reserved for all the sidelink data that may be sent, and all possible sidelink HARQs are jointly used to generate a semi-static HARQ codebook. In this way, a communication error caused by that the network device and the first terminal device have inconsistent understandings of a quantity of HARQ bits sent to the network device and a corresponding sequence due to a loss of an SL PDCCH is avoided. This can improve HARQ feedback reliability. In addition, compared with separate feedback of one HARQ for sidelink transmission, a plurality of HARQs for sidelink transmission are fed back together. This can improve spectrum utilization, reduce a probability of a conflict between a plurality of resources used for HARQ transmission, and reduce implementation complexity of the terminal device.

In a possible implementation of the second aspect, the determining, by the first terminal device, the HARQ based on the third time domain resource set and the fourth time domain resource set includes: determining, by the first terminal device, the HARQ based on a frame structure configuration of a time domain resource included in the third time domain resource set and a frame structure configuration of a time domain resource included in the fourth time domain resource set. In this implementation, the HARQ is determined based on the third time domain resource set and the fourth time domain resource set by using the frame structure configuration. This can improve efficiency of determining the HARQ.

In a possible implementation of the second aspect, the method further includes: sending, by the first terminal device, the HARQ to the network device on the first time domain resource.

According to a third aspect, a feedback information transmission method is provided. The method may be performed by a first terminal device, or may be performed by a chip used in a first terminal device. An example in which the method is performed by the first terminal device is used. The method includes:
determining, by the first terminal device based on a first time domain offset set, a fifth time domain resource set corresponding to a first time domain resource, where the first time domain resource is used by the first terminal device to send a hybrid automatic repeat request HARQ to a network device, and the first time domain offset set corresponds to a sidelink; monitoring, by the first terminal device, first downlink control information on a time domain resource included in the fifth time domain resource set, where the first downlink control information is used to indicate a sidelink resource, and the sidelink resource is used by the first terminal device to send sidelink data; and sending, by the first terminal device, a HARQ to the network device on the first time domain resource based on at least one piece of detected first downlink control information, where the HARQ includes a sidelink HARQ for sidelink data corresponding to the at least one piece of first downlink control information.

According to the feedback information transmission method provided in the third aspect, based on the first time domain resource used to send the sidelink HARQ and the fifth time domain offset set, the time domain resource included in the fifth time domain resource set is used by the first terminal device to monitor the first downlink control information, the first downlink control information is used to indicate the sidelink resource, and the sidelink resource is used by the first terminal device to send the sidelink data. The sidelink HARQ corresponding to the sidelink data is determined based on the at least one piece of first downlink control information detected on the time domain resource included in the fifth time domain resource set, and all the sidelink HARQs are jointly used to generate a dynamic HARQ codebook, to resolve a problem that a transmission resource conflict occurs because a sending device needs to separately transmit a HARQ corresponding to each sidelink transmission. This improves spectrum utilization, improves data transmission reliability, and reduces implementation complexity of the terminal device.

In a possible implementation of the third aspect, the HARQ further includes a downlink HARQ corresponding to downlink data, and the downlink data is data that is received by the first terminal device from the network device;
the method further includes:
determining, by the first terminal device based on a third time domain offset set, a sixth time domain resource set corresponding to the first time domain resource, where the sixth time domain resource set includes a plurality of time domain resources used to transmit downlink control information, and the third time domain offset set corresponds to a downlink; and monitoring, by the first terminal device, second downlink control information on a time domain resource included in the sixth time domain resource set, where the second downlink control information is used to indicate a downlink resource, and the downlink resource is used by the first terminal device to receive the downlink data; and
the sending, by the first terminal device, a HARQ to the network device on the first time domain resource based on at least one piece of detected first downlink control information includes:
   sending, by the first terminal device, the HARQ to the network device on the first time domain resource based on the at least one piece of detected first downlink control information and at least one piece of detected second downlink control information.

In this implementation, a time domain resource of the first downlink control information used to schedule the sidelink resource and a time domain resource of the second control information used to schedule the downlink resource are determined based on different time domain offset sets. The sidelink resource is used to transmit the sidelink data, and the downlink resource is used to transmit the downlink data. On a time domain resource on which the first downlink control information and the second downlink control information may be transmitted, the sidelink HARQ corresponding to the sidelink data and the downlink HARQ corresponding to the downlink data are determined based on the detected first downlink control information and second downlink control information, and the sidelink HARQ and the downlink HARQ are jointly used to generate a dynamic HARQ codebook. This resolves a problem of a conflict between transmission resources of the sidelink HARQ and the downlink HARQ, ensures normal operation of a HARQ feedback mechanism, and improves data transmission reliability. Compared with a resource conflict that may be caused when a transmission resource is separately used to transmit the sidelink HARQ and the downlink HARQ, this can resolve a problem that the sending device needs to transmit the sidelink HARQ and the downlink HARQ in a same slot, improve spectrum utilization, improve data transmission reliability, and reduce implementation complexity of the terminal device.

In a possible implementation of the third aspect, when the first downlink control information and the second downlink control information are detected in a serving cell and on a monitoring occasion, the sidelink HARQ for the sidelink data corresponding to the detected first downlink control information is located before the downlink HARQ for the downlink data corresponding to the detected second downlink control information, or the sidelink HARQ for the sidelink data corresponding to the detected first downlink control information is located after the downlink HARQ for the downlink data corresponding to the detected second downlink control information. In this implementation, the first downlink control information used to indicate the sidelink resource and the second downlink control information used to schedule the downlink data are detected on the PDCCH monitoring occasion and in the serving cell, so that a relative location (a sequence) of the sidelink HARQ corresponding to the first downlink control information and the downlink HARQ corresponding to the second downlink control information is determined, thereby improving accuracy of HARQ feedback, and ensuring normal operation of a HARQ mechanism.

In a possible implementation of the third aspect, when the first downlink control information and the second downlink control information are detected in a serving cell and on a monitoring occasion, when an index of a first control channel element CCE corresponding to the detected first downlink control information is less than an index of a first CCE corresponding to the detected second downlink control information, the sidelink HARQ for the sidelink data corresponding to the detected first downlink control information is located before the downlink HARQ for the downlink data corresponding to the detected second downlink control information; or
when an index of a first control channel element CCE corresponding to the detected first downlink control information is greater than an index of a first CCE corresponding to the detected second downlink control information, the sidelink HARQ for the sidelink data corresponding to the detected first downlink control information is located after the HARQ for the downlink data corresponding to the detected second downlink control information.

In a possible implementation of the third aspect, a value of a counter downlink assignment indicator C-DAI corresponding to the detected first downlink control information is less than a value of a C-DAI corresponding to the detected second downlink control information, or a value of a counter downlink assignment indicator C-DAI corresponding to the detected first downlink control information is greater than a value of a C-DAI corresponding to the detected second downlink control information.

In a possible implementation of the third aspect, the first time domain offset set is a set of time domain offsets between the first time domain resource and a time domain resource occupied by the sidelink data, and the determining, by the first terminal device based on a first time domain offset set, a fifth time domain resource set corresponding to a first time domain resource includes:
determining, by the first terminal device based on the time domain offsets included in the first time domain offset set and the first time domain resource, time domain resources occupied by a plurality of pieces of sidelink data; and determining, by the first terminal device, the fifth time domain resource set based on a second parameter and the time domain resources occupied by the plurality of pieces of sidelink data, where the second parameter is a time domain offset between the time domain resources of the sidelink data and a time domain resource occupied by downlink control information.

In a possible implementation of the third aspect, the first time domain offset set is a set of time domain offsets between the first time domain resource and a time domain resource of the sidelink HARQ, the time domain resource of the sidelink HARQ is a time domain resource on which the first terminal device receives the sidelink HARQ, and the determining, by the first terminal device based on a first time domain offset set, a fifth time domain resource set corresponding to a first time domain resource includes:
determining, by the first terminal device, the fifth time domain resource set based on a third parameter and the time domain offsets included in the first time domain offset set, where the third parameter includes a time domain offset between a time domain resource of the sidelink data and a time domain resource occupied by downlink control information, a resource feedback periodicity, and a time domain offset between the time domain resource of the sidelink data and the time domain resource of the sidelink HARQ.

In a possible implementation of the third aspect, the first time domain offset set is a set of time domain offsets between the first time domain resource and a time domain resource occupied by downlink control information; and the determining, by the first terminal device based on a first time domain offset set, a fifth time domain resource set corresponding to a first time domain resource includes:
determining, by the first terminal device, the fifth time domain resource set based on the time domain offsets included in the first time domain offset set and the first time domain resource.

According to a fourth aspect, a feedback information transmission method is provided. The method may be performed by a network device, or may be performed by a chip used in a network device. The method includes: determining a first resource used to transmit a sidelink HARQ and a second resource used to transmit a downlink HARQ, where the sidelink HARQ is a HARQ corresponding to sidelink data sent by a first terminal device, and the downlink HARQ is a HARQ corresponding to downlink data sent by a network device to the first terminal device; and when the first resource and the second resource overlap in time domain, receiving feedback information from the first terminal device on a third resource, where the feedback information includes the sidelink HARQ and/or the downlink HARQ, the feedback information is determined based on a priority of the sidelink HARQ and a first threshold, and the third resource is determined based on the first resource and the second resource.

According to the feedback information transmission method provided in the fourth aspect, when the resource for transmitting the sidelink HARQ and the resource for transmitting the downlink HARQ overlap in time domain, the threshold is compared with the priority of the sidelink HARQ, and the threshold is used to represent a priority of a downlink service type. Different downlink service types may correspond to different thresholds. The feedback information received on the third resource is determined based on a comparison result. The feedback information of the third resource may be a combination of or one of the sidelink HARQ and the downlink HARQ. This can ensure normal operation of a HARQ feedback mechanism and improve data transmission reliability.

In a possible implementation of the fourth aspect, the priority of the sidelink HARQ is: the priority of the sidelink HARQ is a priority of the first resource, or the priority of the sidelink HARQ is a priority of the sidelink data corresponding to the sidelink HARQ, or the priority of the sidelink HARQ is a priority of a PSSCH corresponding to the sidelink HARQ; or the priority of the sidelink HARQ is a value of a priority field in SCI for scheduling the sidelink data, or the priority of the sidelink HARQ is a priority of a channel for transmitting the sidelink HARQ, or the priority of the sidelink HARQ is a priority of sidelink transmission corresponding to the sidelink HARQ.

In a possible implementation of the fourth aspect, when there are a plurality of pieces of data corresponding to the sidelink HARQ, the priority of the sidelink HARQ is a priority of data with a highest priority in the plurality of pieces of data.

In a possible implementation of the fourth aspect, the first threshold is determined from at least one threshold based on a service type of the downlink data, and the at least one threshold corresponds to different service types.

In a possible implementation of the fourth aspect, when the priority of the sidelink HARQ is less than or equal to the first threshold, the feedback information includes only the downlink HARQ; or when the priority of the sidelink HARQ is greater than the first threshold, the feedback information includes only the sidelink HARQ.

In a possible implementation of the fourth aspect, when the priority of the sidelink HARQ is greater than the first threshold, the feedback information includes the sidelink HARQ and the downlink HARQ; or when the priority of the sidelink HARQ is less than or equal to the first threshold, the feedback information includes only the sidelink HARQ.

According to a fifth aspect, a feedback information transmission apparatus is provided. The apparatus includes units configured to perform the steps in any one of the first aspect to the third aspect or the possible implementations of the first aspect to the third aspect.

According to a sixth aspect, a feedback information transmission apparatus is provided. The apparatus includes units configured to perform the steps in any one of the fourth aspect or the possible implementations of the fourth aspect.

According to a seventh aspect, a feedback information transmission apparatus is provided. The apparatus includes at least one processor and a memory, where the at least one processor is configured to perform the method in any one of the first aspect to the third aspect or the possible implementations of the first aspect to the third aspect.

According to an eighth aspect, a feedback information transmission apparatus is provided. The apparatus includes at least one processor and a memory, where the at least one processor is configured to perform the method in any one of the fourth aspect or the possible implementations of the fourth aspect.

According to a ninth aspect, a feedback information transmission apparatus is provided. The apparatus includes at least one processor and an interface circuit, where the at least one processor is configured to perform the method in any one of the first aspect to the third aspect or the possible implementations of the first aspect to the third aspect.

According to a tenth aspect, a feedback information transmission apparatus is provided. The apparatus includes at least one processor and an interface circuit, where the at least one processor is configured to perform the method in any one of the fourth aspect or the possible implementations of the fourth aspect.

According to an eleventh aspect, a terminal device is provided. The terminal device includes the feedback information transmission apparatus provided in the fifth aspect, or the terminal device includes the feedback information transmission apparatus provided in the seventh aspect, or the terminal device includes the feedback information transmission apparatus provided in the ninth aspect.

According to a twelfth aspect, a network device is provided. The terminal device includes the communications apparatus provided in the sixth aspect, or the terminal device includes the communications apparatus provided in the eighth aspect, or the terminal device includes the communications apparatus provided in the tenth aspect.

According to a thirteenth aspect, a computer program product is provided. The computer program product includes a computer program. When being executed by a processor, the computer program is configured to perform the method in any one of the first aspect to the fourth aspect or the possible implementations of the first aspect to the fourth aspect.

According to a fourteenth aspect, a computer-readable storage medium is provided. The computer-readable storage medium stores a computer program. When being executed, the computer program is configured to perform the method in any one of the first aspect to the fourth aspect or the possible implementations of the first aspect to the fourth aspect.

According to a fifteenth aspect, a chip is provided. The chip includes a processor, configured to invoke a computer program from a memory and run the computer program, so that an apparatus in which the chip is installed performs the method in any one of the foregoing aspects or the possible implementations of the foregoing aspects.

According to the feedback information transmission method and apparatus provided in this application, when the resource for transmitting the sidelink HARQ and the resource for transmitting the downlink HARQ overlap in time domain, the threshold is compared with the priority of the sidelink HARQ, and the threshold is used to represent a priority of a downlink service type. Different downlink service types may correspond to different thresholds. The feedback information transmitted on the third resource is determined based on a comparison result. The feedback information of the third resource may be a combination of or one of the sidelink HARQ and the downlink HARQ. This can ensure normal operation of a HARQ feedback mechanism and improve data transmission reliability.

### BRIEF DESCRIPTION OF DRAWINGS

FIG. 1 is a schematic architectural diagram of a mobile communications system to which an embodiment of this application is applicable;
FIG. 2 is a schematic architectural diagram of another mobile communications system to which an embodiment of this application is applicable;
FIG. 3 is a schematic interaction diagram of a feedback information transmission method according to an embodiment of this application;
FIG. 4 is a schematic interaction diagram of another feedback information transmission method according to an embodiment of this application;
FIG. 5 is a schematic interaction diagram of a feedback information determining method according to an embodiment of this application;
FIG. 6 is a schematic interaction diagram of another feedback information determining method according to an embodiment of this application;
FIG. 7 is a schematic interaction diagram of still another feedback information determining method according to an embodiment of this application;
FIG. 8 is a schematic diagram of a first time domain offset set according to an embodiment of this application;
FIG. 9 is a schematic interaction diagram of still another feedback information determining method according to an embodiment of this application;
FIG. 10 is a schematic diagram of another first time domain offset set according to an embodiment of this application;
FIG. 11 is a schematic interaction diagram of still another feedback information determining method according to an embodiment of this application;
FIG. 12 is a schematic diagram of another first time domain offset set according to an embodiment of this application;
FIG. 13 is a schematic interaction diagram of a feedback information transmission method according to an embodiment of this application;
FIG. 14 is a schematic interaction diagram of another feedback information transmission method according to an embodiment of this application;
FIG. 15 is a schematic interaction diagram of still another feedback information transmission method according to an embodiment of this application;
FIG. 16 is a schematic block diagram of a feedback information transmission apparatus according to an embodiment of this application;
FIG. 17 is a schematic block diagram of another feedback information transmission apparatus according to an embodiment of this application;
FIG. 18 is a schematic block diagram of a feedback information transmission apparatus according to an embodiment of this application;
FIG. 19 is a schematic block diagram of another feedback information transmission apparatus according to an embodiment of this application;
FIG. 20 is a schematic block diagram of a feedback information transmission apparatus according to an embodiment of this application;
FIG. 21 is a schematic block diagram of another feedback information transmission apparatus according to an embodiment of this application;
FIG. 22 is a schematic block diagram of a terminal device according to an embodiment of this application;
FIG. 23 is a schematic block diagram of another terminal device according to an embodiment of this application; and
FIG. 24 is a schematic block diagram of a network device according to an embodiment of this application.

### DESCRIPTION OF EMBODIMENTS

The following describes technical solutions in this application with reference to the accompanying drawings.

The technical solutions of embodiments of this application may be applied to various communications systems, such as a V2X or device to device (device to device, D2D) communications system, a global system for mobile communications (Global System of Mobile Communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunication System, UMTS) system, a worldwide interoperability for microwave access (Worldwide Interoperability for Microwave Access, WiMAX) communications system, a future 5th generation (5th Generation, 5G) system, or a new radio (New Radio, NR) system.

A terminal device in the embodiments of this application may be user equipment, an access terminal, a subscriber unit, a subscriber station, a mobile station, a mobile station, a remote station, a remote terminal, a mobile device, a user terminal, a terminal, a wireless communications device, a user agent, a user apparatus, a vehicles or a vehicle-mounted device in a V2X communications system, or the like. Alternatively, the terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, or a vehicle-mounted device. For example, the terminal device may be a vehicle-mounted module, a vehicle-mounted assembly, a vehicle-mounted component, a vehicle-mounted chip, or a vehicle-mounted unit that is built in a vehicle as one or more components or units, and the vehicle may implement the method in this application by using the vehicle-mounted module, the vehicle-mounted assembly, the vehicle-mounted component, the vehicle-mounted chip, the vehicle-mounted unit, or a roadside station that is built in the vehicle. Alternatively, the terminal device may be a terminal device in a future 5G network, a terminal device in a future evolved public land mobile network (public land mobile network, PLMN), or the like. This is not limited in the embodiments of this application.

A network device in the embodiments of this application may be a device configured to communicate with the terminal device. The network device may be a base transceiver station (Base Transceiver Station, BTS) in a global system for mobile communications (Global System of Mobile communication, GSM) system or a code division multiple access (Code Division Multiple Access, CDMA) system, or may be a NodeB (NodeB, NB) in a wideband code division multiple access (Wideband Code Division Multiple Access, WCDMA) system, or may be an evolved NodeB (Evolutional NodeB, eNB or eNodeB) in an LTE system, or may be a radio controller in a scenario of a cloud radio access network (Cloud Radio Access Network, CRAN). Alternatively, the network device may be a serving transmission reception point (serving transmission reception point, Serving TRP), a relay station, an access point, a vehicle-mounted device, a wearable device, a network device in a future 5G network, a network device in a future evolved PLMN network, or the like. This is not limited in the embodiments of this application.

In the embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant communications software. In addition, the embodiments of this application impose no special limitation on a specific structure of an execution body of the method provided in the embodiments of this application, provided that a program that records code of the method provided in the embodiments of this application can be run to perform communication according to the method provided in the embodiments of this application. For example, the method provided in the embodiments of this application may be performed by the terminal device or the network device, or may be performed by a function module that is in the terminal device or the network device and that can invoke and execute a program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but are not limited to a radio channel and various other media that can store, include, and/or carry instructions and/or data.

Currently, in downlink transmission of 5G new radio (new radio, NR), a semi-persistent scheduling (semi-persistent scheduling, SPS) physical downlink shared channel (physical downlink shared channel, PDSCH) and a dynamically scheduled PDSCH are supported. For downlink data transmission, a HARQ is an efficient feedback mechanism. On one hand, reliability of downlink data transmission can be greatly improved through retransmission. On the other hand, the terminal device feeds back HARQ acknowledgment (acknowledgement, ACK)/negative acknowledgment (negative acknowledgement, NACK) information, and the network device needs to perform retransmission only when a NACK is fed back, thereby improving data transmission efficiency.

In an NR design, configuration of two types of HARQ-ACK codebooks, namely, a dynamic codebook (dynamic codebook) and a semi-static codebook (semi-static codebook), is supported. For downlink data transmission, a hybrid automatic repeat request (hybrid automatic repeat request, HARQ) is an efficient transmission mechanism. On one hand, reliability of downlink data transmission can be greatly improved through retransmission. On the other hand, user equipment (user equipment, UE) feeds back HARQ acknowledgment (acknowledgement, ACK)/negative acknowledgment (negative acknowledgement, NACK) information, and the network device needs to perform retransmission only when a NACK is fed back, thereby improving data transmission efficiency and reliability. In an NR design, configuration of two types of HARQ-ACK codebooks, namely, a dynamic codebook (dynamic codebook) and a semi-static codebook (semi-static codebook), is supported. The HARQ-ACK codebook may be understood as an arrangement of ACKs/NACKs that need to be fed back in an uplink time unit and that correspond to PDSCHs. Two meanings are included. First, the HARQ-ACK codebook includes ACKs/NACKs of specific PDSCHs. Second, an arrangement order of the ACKs/NACKs of the PDSCHs is shown in the codebook. In other words, feedback information ACK/NACK of at least one PDSCH that needs to be sent in a same uplink time unit is arranged into a string of consecutive bits in a specific order, to form the HARQ-ACK codebook.

A dynamic codebook (Dynamic codebook) mode is also referred to as a type 2 HARQ codebook. The terminal device monitors a PDCCH on each PDCCH monitoring occasion (monitoring occasion), and by using a time domain resource allocation (time domain resource allocation) field and a PDSCH-to-HARQ-timing field in the detected PDCCH, first, determines, based on a slot offset K0 from the PDCCH to a PDSCH included in the time domain resource allocation field and a number of a slot in which the PDCCH is located, a number of a slot in which the PDSCH is located, for example, if the number of the slot in which the PDCCH is located is n, may determine, based on K0, that the number of the slot in which the PDSCH is located is n+K0; then, obtains HARQ-ACK timing based on the PDSCH-to-HARQ-timing field, that is, a slot offset K1 from the PDSCH to a corresponding ACK/NACK feedback, to learn of a number of a slot in which the corresponding ACK/NACK feedback is located. For example, if the number of the slot in which the PDSCH is located is n+K0, it is determined that the number of the slot in which the ACK/NACK feedback corresponding to the PDSCH is located is n+K0+K1. All ACKs/NACKs that need to be sent in a same slot are connected in series in a sequence from front to rear in time domain of PDCCHs of PDSCHs corresponding to the ACKs/NACKs, to generate a HARQ-ACK codebook. For example, in the slot numbered n+K0+K1, ACK/NACK feedback information corresponding to four pieces of data a PDSCH 1 to a PDSCH 4 needs to be sent, and PDCCHs corresponding to the PDSCH 1 to the PDSCH 4 are a PDCCH 1 to a PDCCH 4. The PDCCH 1 to the PDCCH 4 are in a sequence from front to rear in time domain, and the feedback information of the PDSCH 1 to the PDSCH 4 is sequentially connected in series to generate a HARQ-ACK codebook.

A semi-static codebook (Semi-static codebook) mode is also referred to as a type 1 HARQ codebook. A process of determining the semi-static codebook includes the following steps. (1) The terminal device determines that a slot at which ACK/NACK feedback information is sent is an i^{th} slot, and a specific slot i is determined based on a PDCCH corresponding to a PDSCH. Assuming that a PDSCH in a slot n schedules the PDSCH, so that the PDSCH is sent in a slot n+K0, and it is indicated that ACK/NACK feedback information corresponding to the PDSCH is in a slot n+K0+K1, the slot n+K0+K1 is the slot i. (2) A possible value K1 set (K1 set) of K1 is obtained based on configuration information sent by using higher layer signaling. Based on the information, the terminal device determines all slots in which all PDSCHs that need to send feedback information in the i^{th} slot may be located. (3) Then, a set of potential values of PDSCH time domain positions is determined based on a time domain resource allocation table included in the configuration information sent by using the higher layer signaling, and a PDSCH candidate occasion (candidate occasion) is determined in each of slots in which all PDSCHs may be located. (4) ACKs/NACKs corresponding to all the PDSCH candidate occasions in each of the slots in which all the PDSCHs may be located are connected in series in a sequence from front to rear in time domain of the PDSCH candidate occasions and in a sequence from front to rear in time domain of all the slots, so that a HARQ-ACK codebook is generated.

For a size of the HARQ codebook, usually, a sender sends a transport block (Transmit Block, TB). If a receiver successfully receives the TB, the receiver feeds back an ACK to the sender. If the receiver fails to receive the TB, the receiver feeds back a NACK to the sender, and the sender retransmits the TB after receiving the NACK. In addition, after a cyclic redundancy check (cyclic redundancy check, CRC) check bit is added to a TB, the TB is segmented into a plurality of code blocks (code Block, CB). A CRC check bit is added to each CB. A TB-based feedback means that one bit is fed back for one TB. A 1-bit ACK is fed back if a TB is correctly received, and a 1-bit NACK is fed back if a TB fails to be received. One TB usually includes a plurality of CBs. The plurality of CBs are divided into a plurality of code block groups (code Block group, CBG) according to a specific rule, and one CBG includes a plurality of CBs. A CBG-based feedback means that one bit is fed back for one CBG. If CRC check of all CBs in a CBG succeeds, an ACK is fed back; otherwise, a NACK is fed back.

V2X communication is an important key technology for implementing environment perception and information exchange in the Internet of vehicles. Another device herein may be another vehicle, another infrastructure, a pedestrian, a terminal device, or the like. V2X communication may be considered as a special case of device-to-device (device to device, D2D) communication. A communications link between different user terminal devices may be referred to as an SL. For example, a communications link between vehicles may be an SL. In the V2X communications system, a physical sidelink control channel (physical sidelink control channel, PSCCH) is used to transmit control information in V2X communication, and a physical sidelink shared channel (physical sidelink shared channel, PSSCH) is used to transmit data in V2X communication.

Currently, physical resource allocation in V2X communication includes two allocation manners, and V2X communication includes two communication modes: In a first resource allocation manner, based on scheduling of the network device (for example, a base station), user equipment (for example, which may be a vehicle or a vehicle-mounted device) in V2X sends a control message and data of V2X communication on a scheduled time-frequency resource based on scheduling information of the network device. In a second resource allocation manner, the user equipment in V2X selects a time-frequency resource used for V2X communication from available time-frequency resources included in a preconfigured V2X communication resource pool (or may also be referred to as a V2X resource set). In the first resource allocation manner, all sidelink resources are allocated by the network device. In addition, a similar HARQ feedback mechanism is also used for communication between terminal devices by using a sidelink, to determine whether sidelink data (for example, a PSSCH) is successfully sent. For example, on a sidelink, if cyclic redundancy check (cyclic redundancy check, CRC) of data received by a terminal device (briefly referred to as a receiving device) that receives the data fails, the receiving device feeds back NACK information. After receiving the NACK, a sending device retransmits sidelink data. However, in this case, if the sending device works in the first resource allocation manner, a retransmission resource also needs to be scheduled by the network device, and the sending device needs to feed back corresponding sidelink HARQ information of the sidelink to the network device.

The sending device also receives downlink data sent by the network device (for example, receives the downlink data by using a PDSCH), and the sending device also needs to feed back, to the network device, a downlink HARQ corresponding to the downlink data. Because both the downlink HARQ and the sidelink HARQ need to be sent to the network device by using a physical uplink control channel (physical uplink control channel, PUCCH) resource, if a PUCCH for sending the downlink HARQ and a PUCCH for sending the sidelink HARQ cannot be in a same slot, the PUCCH for sending the downlink HARQ and the PUCCH for sending the sidelink HARQ do not collide. However, uplink resources are limited. This severely affects Uu communication performance and a downlink data transmission latency. Therefore, the PUCCH for sending the downlink HARQ and the PUCCH for sending the downlink HARQ may be transmitted in a same slot. Therefore, a problem that the PUCCH for sending the downlink HARQ and the PUCCH for sending the downlink HARQ overlap (overlap) in time domain may be caused, and a resource conflict is caused. Consequently, transmission of the downlink HARQ and the sidelink HARQ is affected, and normal operation of a HARQ feedback mechanism cannot be ensured. Consequently, data transmission reliability is reduced, and communication efficiency is reduced.

In view of this, this application provides a feedback information transmission method. When a transmission resource of a sidelink HARQ and a transmission resource of a downlink HARQ overlap in time domain, a predefined or preconfigured threshold is used to compare with a priority of the sidelink HARQ, and the threshold may be used to represent a priority corresponding to the downlink HARQ. A rule for multiplexing or dropping the sidelink HARQ and the downlink HARQ is determined based on a comparison result, thereby ensuring normal operation of a HARQ feedback mechanism for sidelink transmission with a high priority, and improving data transmission reliability.

Herein, the transmission resource of the sidelink HARQ may be understood as a transmission resource of a PUCCH carrying the sidelink HARQ, and the transmission resource of the downlink HARQ may be understood as a transmission resource of a PUCCH or a PUSCH carrying the downlink HARQ.

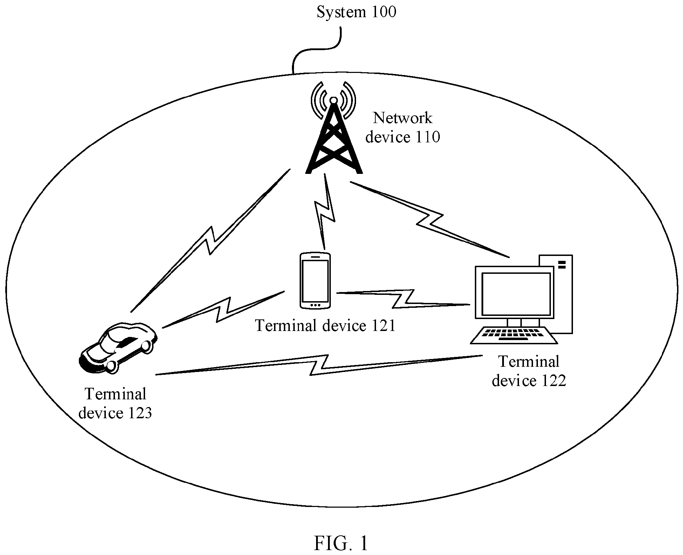

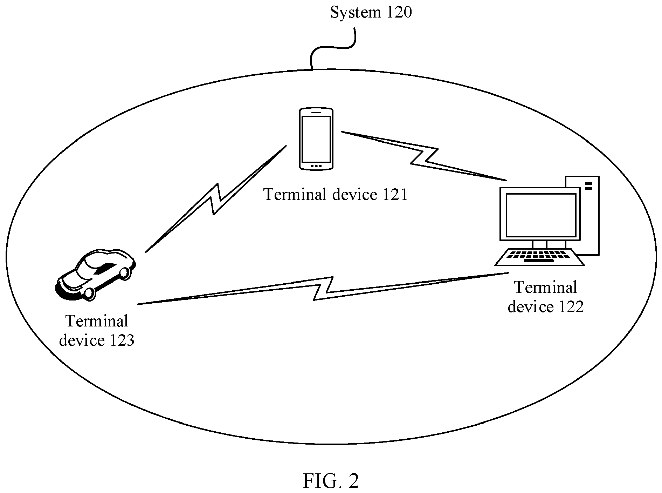

For ease of understanding the embodiments of this application, a communications system to which the embodiments of this application are applicable is first briefly described with reference to FIG. 1 and FIG. 2.

FIG. 1 is a schematic diagram of a communications system 100 to which a communication method in the embodiments of this application is applicable. As shown in FIG. 1, the communications system 100 includes four communications devices, for example, a network device 110 and terminal devices 121 to 123. Data communication may be performed between the network device 110 and at least one of the terminal devices 121 to 123 through a wireless connection. For the terminal devices 121 to 123, a link formed between every two of the terminal devices 121 to 123 is an SL. For example, after the terminal device 121 sends sidelink data to the terminal device 122 and receives a HARQ fed back by the terminal device 122, when sidelink HARQ feedback and downlink HARQ feedback are performed between the terminal device 121 and the network device 110, feedback information may be transmitted by using the feedback information transmission method provided in this application. The terminal device 121 may send the sidelink data to a plurality of other terminal devices (including the terminal device 122 sending the sidelink data to the terminal device 123) in a multicast or broadcast manner. The terminal device 122 and the terminal device 123 may respectively feed back, to the terminal device 121, sidelink HARQs corresponding to sidelink data of the terminal device 122 and the terminal device 123. The sidelink HARQ sent by the terminal device 121 to the network device 110 may include a sidelink HARQ corresponding to sidelink data sent by the terminal device 121 to a plurality of other terminal devices.

FIG. 2 is a schematic diagram of another communications system 120 to which a communication method in the embodiments of this application is applicable. As shown in FIG. 2, the communications system 120 includes three communications devices, for example, terminal devices 121 to 123. The terminal devices may perform data communication with each other in a D2D or V2X communication manner. For the terminal devices 121 to 123, a link between every two of the terminal devices 121 to 123 is an SL. For example, the terminal device 121 may send sidelink data to a plurality of other terminal devices (including the terminal device 122 sending the sidelink data to the terminal device 123) in a multicast or broadcast manner. The terminal device 122 and the terminal device 123 may respectively feed back, to the terminal device 121, sidelink HARQs corresponding to sidelink data received by the terminal device 122 and the terminal device 123. Optionally, the terminal device 121 may send, to the network device on one or more PUCCHs, sidelink HARQs corresponding to sidelink data fed back by a plurality of other terminal devices to the terminal device 121.

It should be understood that the communications systems shown in FIG. 1 and FIG. 2 may further include more network nodes, for example, terminal devices or network devices. The network devices or the terminal devices included in the communications systems shown in FIG. 1 and FIG. 2 may be the network devices or the terminal devices in the foregoing various forms. The embodiments of this application are not shown one by one in the figures.

It should be understood that, in the embodiments of this application, an example in which the methods in the embodiments are performed by the terminal device and the network device is used to describe the methods in the embodiments. By way of example rather than limitation, the method may be performed by a chip used in the terminal device and a chip used in a base station, or may be performed by an apparatus that implements a function of the terminal device or the network device. The terminal device may be a vehicle, a vehicle-mounted device, a mobile phone terminal, or the like in V2X communication.

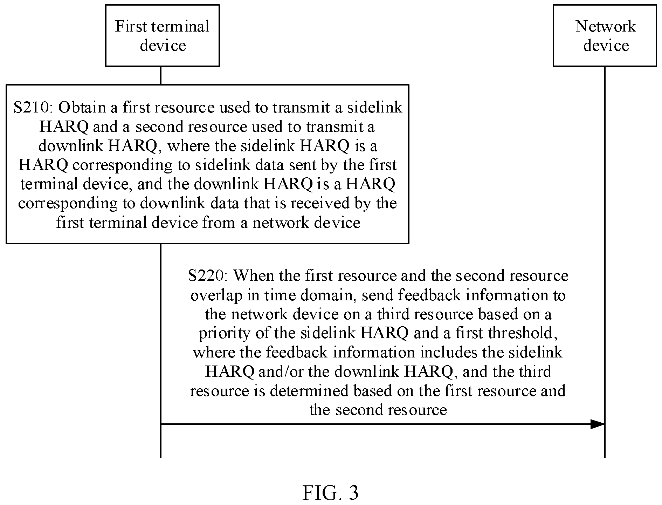

As shown in FIG. 3, the feedback information transmission method 200 shown in FIG. 3 may include step S210 to step S230. The following describes the steps in the method 200 in detail with reference to FIG. 3.

S210: A first terminal device obtains a first resource used to transmit a sidelink HARQ and a second resource used to transmit a downlink HARQ, where the sidelink HARQ is a HARQ corresponding to sidelink data sent by the first terminal device, and the downlink HARQ is a HARQ corresponding to downlink data that is received by the first terminal device from a network device.

S220: When the first resource and the second resource overlap in time domain, the first terminal device sends feedback information to the network device on a third resource based on a priority of the sidelink HARQ and a first threshold, where the feedback information includes the sidelink HARQ and/or the downlink HARQ, and the third resource is determined based on the first resource and the second resource. Correspondingly, the network device receives, on the third resource, the feedback information sent by the first terminal device.

Specifically, in S210, the first terminal device may send the sidelink data to one or more terminal devices on a sidelink. For example, the first terminal device may send the sidelink data to a plurality of other terminal devices in a unicast data transmission manner or a multicast data transmission manner. Each terminal device receiving the sidelink data may feed back, to the first terminal device by using a physical sidelink feedback channel (physical sidelink feedback channel, PSFCH) between the terminal device and the first terminal device, a sidelink HARQ corresponding to sidelink data received by the terminal device. In other words, the first terminal device may receive one or more sidelink HARQs.

The first terminal device needs to obtain the first resource used to transmit the sidelink HARQ. The first resource may be used by the first terminal device to send the sidelink HARQ to the network device. The sidelink HARQ may be sent to the first terminal device by another terminal device that receives the sidelink data. The network device may notify, by using higher layer signaling or physical layer signaling, the first terminal device of a time-frequency location of the first resource and a slot in which the first resource is located. Alternatively, the time-frequency location of the first resource may be predefined in a protocol. The first resource may also be understood as a first PUCCH or a first PUSCH.

The first terminal device may also receive the downlink data (a PDSCH) sent by the network device. Therefore, the downlink HARQ corresponding to the downlink data also needs to be fed back to the network device. Therefore, the first terminal device needs to obtain the second resource used to send the downlink HARQ. The second resource may be used by the first terminal device to send the downlink HARQ to the network device. The network device may notify, by using higher layer signaling or physical layer signaling, the first terminal device of a time-frequency location of the second resource and a slot in which the second resource is located. Alternatively, the time-frequency location of the second resource may be predefined in a protocol. The second resource may also be understood as a second PUCCH or a second PUSCH.

When the first resource and the second resource overlap (overlap) in time domain, for example, the first resource and the second resource partially or completely overlap in time domain, feedback of the downlink HARQ or the sidelink HARQ is affected. As a result, one or two of the downlink HARQ or the sidelink HARQ cannot be normally fed back. A priority of the downlink data cannot be reflected at a physical layer. For example, although a priority of an ultra-reliable low-latency communication (ultra-reliable and low-latency communications, URLLC) service is higher than that of an enhanced mobile broadband (enhanced mobile broadband, eMBB) service, this is a priority comparison between two different service types, in other words, the URLLC service represents a high priority, and the eMBB service represents a low priority. However, priorities of data packets of a same service cannot be compared at a physical layer. However, in V2X, a priority of the sidelink data is visible at the physical layer. Therefore, priorities of different data may be compared at the physical layer. Therefore, in this embodiment of this application, when the first resource collides with the second resource in time domain, because the priority of the sidelink HARQ is equal to the priority of the corresponding sidelink data, the priority of the sidelink data may be compared with a preconfigured or predefined threshold (the first threshold). The threshold may be used to reflect the priority of the downlink data. A rule for multiplexing or dropping the sidelink HARQ and the downlink HARQ is determined based on a comparison result. In S220, the first terminal device determines, based on the priority of the sidelink HARQ and the first threshold, the feedback information sent to the network device on the third resource, and sends the feedback information to the network device on the third resource. The feedback information includes the sidelink HARQ and/or the downlink HARQ. The first threshold may correspond to a service type corresponding to the downlink data.

The third resource may also be understood as a third PUCCH or a third PUSCH, and the third resource may be determined based on the first resource and the second resource. For example, the third resource may be the first resource or the second resource. A time-frequency location of the third resource may be notified by the network device to the first terminal device by using higher layer signaling or physical layer signaling, or a time-frequency location of the third resource may be predefined in a protocol. Therefore, the network device may receive, on the third resource, the feedback information sent by the first terminal device. The feedback information includes the sidelink HARQ and/or the downlink HARQ.

It should be understood that the priority of the sidelink HARQ may be understood as a priority of the first resource, or the priority of the sidelink HARQ may be understood as a priority of the sidelink data corresponding to the sidelink HARQ, or the priority of the sidelink HARQ may be understood as a priority of a PSSCH corresponding to the sidelink HARQ; or the priority of the sidelink HARQ may be understood as a value of a priority field in control information (sidelink control information (side link control information, SCI) in a PSCCH) for scheduling the sidelink data, or the priority of the sidelink HARQ may be understood as a priority of a channel for transmitting the sidelink HARQ, or the priority of the sidelink HARQ may be understood as a priority of sidelink transmission corresponding to the sidelink HARQ.

It should be further understood that, in this embodiment of this application, if the sidelink HARQ has only one bit (bit), that is, corresponds to one TB, the priority of the sidelink HARQ is a priority of the TB, or a priority of a PSSCH carrying the TB, or a value of a priority field in SCI for scheduling a PSSCH carrying the TB.

It should be further understood that, if there are a plurality of pieces of data corresponding to the sidelink HARQ, in other words, the sidelink HARQ includes HARQs corresponding to a plurality of different pieces of data (for example, TBs) sent by the first terminal device to one or more terminal devices, the priority of the sidelink HARQ may be a priority of data with a highest priority in the plurality of pieces of data, or the priority of the sidelink HARQ may be a largest value in values of priority fields in a plurality of pieces of SCI for scheduling the plurality of pieces of data, or the priority of the sidelink HARQ may be a priority of a piece of data specified in the plurality of pieces of data. The specified piece of data may be predefined in a protocol or configured by using signaling.

It should be further understood that, in this embodiment of this application, at least one threshold may be preconfigured (including preconfigured by the network device) or predefined, or is configured by the network device by using any one of RRC signaling, MAC signaling, SIB, MIB, PSBCH, and DCI. For example, at least one threshold set may be preconfigured or predefined, the threshold set includes one or more thresholds, and one threshold is used to represent a priority of downlink data of one service type. One threshold corresponds to one service type, and different thresholds may correspond to different service types. Alternatively, a same service type may correspond to a plurality of thresholds, and the plurality of thresholds may include thresholds with different purposes. For example, a same service type may also correspond to two thresholds (a threshold 1 and a threshold 2). The threshold 1 is used when it is determined that multiplexing (joint transmission) is performed on the downlink HARQ and the sidelink HARQ. The threshold 2 is used to determine to compare the downlink HARQ and the sidelink HARQ, and is used when it is determined which HARQ is to be dropped. Whether the sidelink HARQ and the downlink HARQ are multiplexed or dropped may be predefined or preconfigured, or may be configured by the network device by using any one of RRC signaling, MAC signaling, SIB, MIB, PSBCH, or DCI.

According to the feedback information transmission method provided in this application, when the resource for transmitting the sidelink HARQ and the resource for transmitting the downlink HARQ overlap in time domain, the predefined or preconfigured threshold is compared with the priority of the sidelink HARQ, and the threshold is used to represent a priority of a downlink service type. Different downlink service types may correspond to different thresholds. The feedback information transmitted on the third resource is determined based on a comparison result. The feedback information of the third resource may be a combination of or one of the sidelink HARQ and the downlink HARQ. This can ensure normal operation of a HARQ feedback mechanism and improve data transmission reliability.

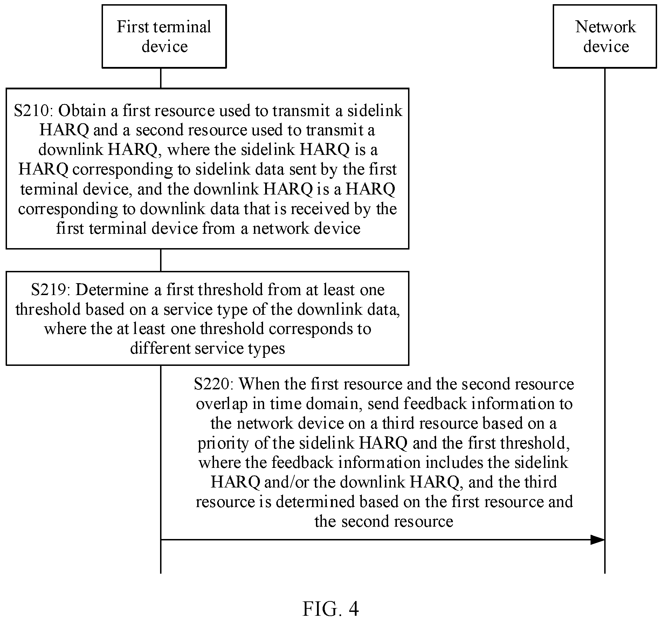

Optionally, in some possible implementations of this application, FIG. 4 is a schematic flowchart of a feedback information transmission method according to some embodiments of this application. Based on the method steps shown in FIG. 3, the method may further include S219.

S219: The first terminal device determines the first threshold from at least one threshold based on a service type of the downlink data, where the at least one threshold corresponds to different service types.

For steps S210 and S220 shown in FIG. 4, refer to the foregoing related descriptions of S210 and S220. For brevity, details are not described herein again.

In S219, at least one threshold may be preconfigured or predefined. One threshold corresponds to one service type, and one threshold is used to represent a priority of downlink data of one service type. Different thresholds may correspond to different service types. The first terminal device may first determine the first threshold from the at least one threshold based on the service type of the downlink data corresponding to the downlink HARQ. The first threshold may correspond to the service type corresponding to the downlink data. Then, the first threshold is compared with the priority of the sidelink HARQ, to determine whether to perform joint transmission of the sidelink HARQ and the downlink HARQ or drop the sidelink HARQ and the downlink HARQ. The first threshold associated with the service type of the downlink data is determined from the at least one threshold, and the first threshold is compared with the priority of the sidelink HARQ, to determine a HARQ included in the feedback information. This can resolve a problem that different transmission resources cannot be simultaneously transmitted after the different transmission resources overlap in time domain, improve accuracy of the determined feedback information, and further improve HARQ feedback efficiency.

Optionally, in some possible implementations of this application, when the priority of the sidelink HARQ is less than or equal to the first threshold, the first terminal device sends, to the network device on the third resource, only the downlink HARQ, namely, a HARQ that includes only the downlink HARQ, and does not include the sidelink HARQ.

When the priority of the sidelink HARQ is greater than the first threshold, the first terminal device sends, to the network device on the third resource, only the sidelink HARQ, namely, a HARQ that includes only the sidelink HARQ, and does not include the downlink HARQ.

The following is described with reference to a specific example.

For example, it is assumed that the downlink HARQ includes a HARQ corresponding to first service data. The first service data may be, for example, an eMBB service or a massive machine-type communications (massive machine type communication, mMTC) service. In other words, the downlink data sent by the network device to the first terminal device is eMBB service data or mMTC service data. In this case, the first terminal device may determine, from the at least one threshold, the first threshold (for example, the threshold 1) corresponding to an eMBB service or an mMTC service. The first threshold may be determined based on a priority corresponding to the eMBB service data or the mMTC service data. The first threshold may be used to represent the priority corresponding to the eMBB service data or the mMTC service data.

When the priority of the sidelink HARQ is less than or equal to a first threshold, the feedback information includes only the downlink HARQ. In other words, the feedback information includes only a HARQ corresponding to the eMBB service data or a HARQ corresponding to the mMTC service data. In other words, when the priority of the sidelink HARQ is less than or equal to the first threshold (the threshold 1), the first terminal device drops (drop) the sidelink HARQ, and sends, to the network device on the third resource, only the HARQ corresponding to the eMBB service data or the HARQ corresponding to the mMTC service data.

When the priority of the sidelink HARQ is greater than the first threshold, the feedback information includes only the sidelink HARQ. In other words, the feedback information includes only the sidelink HARQ corresponding to the sidelink data. In other words, when the priority of the sidelink HARQ is greater than the first threshold, the first terminal device drops (drop) the HARQ corresponding to the eMBB service data or the HARQ corresponding to the mMTC service data, and sends only the sidelink HARQ to the network device on the third resource.

For another example, it is assumed that the downlink HARQ includes a HARQ corresponding to second service data. For example, the second service data may be URLLC service data. In other words, the downlink data sent by the network device to the first terminal device is URLLC service data. In this case, the first terminal device may determine, from the at least one threshold, the threshold 2 corresponding to the URLLC service data. The threshold 2 may be determined based on a priority corresponding to the URLLC service data. The threshold 2 may be used to represent the priority corresponding to the URLLC service data.

When the priority of the sidelink HARQ is less than or equal to the threshold 2, the feedback information includes only the downlink HARQ. In other words, the feedback information includes only a HARQ corresponding to the URLLC service data. In other words, when the priority of the sidelink HARQ is less than or equal to the threshold 2, the first terminal device drops (drop) the sidelink HARQ, and sends, to the network device on the third resource, only the HARQ corresponding to the URLLC service data.

When the priority of the sidelink HARQ is greater than the threshold 2, the feedback information includes only the sidelink HARQ. In other words, the feedback information includes only the sidelink HARQ corresponding to the sidelink data. In other words, when the priority of the sidelink HARQ is greater than the threshold 2, the first terminal device drops (drop) the HARQ corresponding to the URLLC service data, and sends only the sidelink HARQ to the network device on the third resource.

Optionally, in this embodiment of this application, the threshold 1 may be less than the threshold 2.

Optionally, in this embodiment of this application, if the priority of the sidelink HARQ is indicated by using a field in the SCI, and if it is assumed that a corresponding field used by the SCI to indicate the priority is in a default state, the priority of the sidelink HARQ is a lowest priority by default. In other words, the priority of the sidelink HARQ is less than the first threshold (for example, the threshold 1 and the threshold 2).

According to the feedback information transmission method provided in this application, different thresholds are configured for different downlink service types, and thresholds corresponding to data of different downlink service types are used to represent the priority of the downlink data. When the first resource for transmitting the sidelink HARQ and the second resource for transmitting the downlink HARQ overlap in time domain, the priority of the sidelink HARQ is compared with a threshold of a corresponding service type of the downlink HARQ, to determine a HARQ to be dropped or a HARQ that needs to be transmitted. Therefore, the feedback information transmitted on the third resource is determined. Different thresholds are configured for downlink service types with different priorities, so that transmission reliability and a transmission latency of an uplink service with a high priority can be ensured. When the first resource and the second resource overlap, this ensures that a HARQ feedback mechanism of at least one of a sidelink and a downlink normally operates, and improves data transmission reliability of the at least one of the sidelink and the downlink.

Optionally, in some other implementations of this application, when the priority of the sidelink HARQ is greater than the first threshold, sending, by the first terminal device, the sidelink HARQ and the downlink HARQ to the network device on the third resource; or
when the priority of the sidelink HARQ is less than or equal to the first threshold, the first terminal device sends only the downlink HARQ to the network device on the third resource.

The following is described with reference to a specific example.

For example, it is assumed that the downlink HARQ includes a HARQ corresponding to the first service data, and the first service data may be, for example, eMBB service data or mMTC service data. In this case, the first terminal device may determine, from the at least one threshold, the first threshold (for example, a threshold 3) corresponding to the eMBB service or the mMTC service. The threshold 3 may be determined based on a priority corresponding to the eMBB service data or the mMTC service data. The threshold 3 may be used to represent the priority corresponding to the eMBB service data or the mMTC service data.

When the priority of the sidelink HARQ is greater than or equal to the threshold 3, the feedback information includes the sidelink HARQ and the downlink HARQ (a HARQ corresponding to the eMBB service data or a HARQ corresponding to the mMTC service data). In other words, when the priority of the sidelink HARQ is greater than or equal to the threshold 3, the sidelink HARQ and the downlink HARQ are multiplexed, and the first terminal device sends the sidelink HARQ and the downlink HARQ to the network device on the third resource. The sidelink HARQ and the downlink HARQ may be separately encoded, or may be jointly encoded. The joint encoding may be performed by using a code rate of the sidelink HARQ or a code rate of the downlink HARQ.

Optionally, when the sidelink HARQ and the downlink HARQ are multiplexed, the sidelink HARQ may be located before the downlink HARQ. Alternatively, the sidelink HARQ may be located after the downlink HARQ.

When the priority of the sidelink HARQ is less than the threshold 3, the first terminal device may drop (drop) the sidelink HARQ, and the first terminal device sends only the downlink HARQ to the network device on the third resource.

For another example, it is assumed that the downlink HARQ includes a HARQ corresponding to the second service data, and the second service data may be, for example, URLLC service data. In this case, the first terminal device may determine, from the at least one threshold, the first threshold (for example, a threshold 4) corresponding to a URLLC service. The threshold 4 may be determined based on a priority corresponding to the URLLC service data. The threshold 4 may be used to represent the priority corresponding to the URLLC service data.

When the priority of the sidelink HARQ is greater than or equal to the threshold 4, the feedback information includes the sidelink HARQ and the downlink HARQ (a HARQ corresponding to the URLLC service data). In other words, when the priority of the sidelink HARQ is greater than or equal to the threshold 4, the sidelink HARQ and the downlink HARQ are multiplexed, and the first terminal device sends the sidelink HARQ and the downlink HARQ to the network device on the third resource. The sidelink HARQ and the downlink HARQ may be separately encoded, or may be jointly encoded. The joint encoding may be performed by using a code rate of the sidelink HARQ or a code rate of the downlink HARQ.

When the priority of the sidelink HARQ is less than the threshold 4, the first terminal device may drop (drop) the sidelink HARQ, and the first terminal device sends only the downlink HARQ to the network device on the third resource.

Optionally, in this embodiment of this application, the threshold 3 may be less than the threshold 4.

Optionally, in this embodiment of this application, the threshold 1 may be the same as or different from the threshold 3. The threshold 2 may be the same as or different from the threshold 4.

According to the feedback information transmission method provided in this application, different thresholds are configured for different service types, and thresholds corresponding to data of different downlink service types are used to represent the priority of the downlink data. When the first resource for transmitting the sidelink HARQ and the second resource for transmitting the downlink HARQ overlap in time domain, the priority of the sidelink HARQ is compared with a threshold of a corresponding service type of the downlink HARQ, to determine to perform HARQ joint transmission or drop the HARQ. Therefore, feedback information transmitted on a PUCCH is determined. This resolves a problem that all different transmission resources cannot be transmitted after the transmission resources overlap in time domain. A HARQ joint transmission method can ensure normal operation of a sidelink HARQ feedback mechanism and a downlink HARQ feedback mechanism, thereby ensuring reliability of sidelink data and downlink data transmission. A method of dropping one of the HARQs can ensure normal operation of a HARQ feedback mechanism of a high-priority service, thereby ensuring reliability of high-priority sidelink data transmission.

On a sidelink, there may also be a multicast (multicast) transmission manner, a unicast transmission manner, and a broadcast transmission manner. The multicast transmission manner, the unicast transmission manner, and the broadcast transmission manner may also be understood as different service types.

The multicast transmission manner, which may also be referred to as a multicast (multicast) transmission manner, is a technology in which a terminal device that sends data simultaneously sends the same data to a plurality of other terminal devices, that is, point-to-multipoint transmission. The unicast (unicast) transmission manner is a manner in which for same data, a terminal device that sends the data sends the data only to another terminal device, that is, point-to-point transmission. The broadcast (broadcast) transmission manner is a manner in which a terminal device that sends data sends the data, and all other terminal devices can receive the data.

Therefore, a sending device may receive HARQs for sidelink data from a plurality of other receiving devices. The sending device needs to send these HARQs to the network device by using a PUCCH. APUCCH resource is determined based on a PUCCH resource indication index indicated in a corresponding PDCCH, the sending device determines a corresponding PUCCH resource set based on lengths of the HARQs, and determines one PUCCH resource in the PUCCH resource set based on the index, instead of directly indicating a specific time domain resource and a specific frequency domain resource by using the PDCCH. Therefore, when two PUCCHs are simultaneously transmitted in one slot, a conflict of PUCCH transmission resources cannot be avoided by merely relying on scheduling of a base station. For example, it is assumed that a terminal device 1 sends sidelink data to terminal devices 2 and 3. In this case, the terminal device 2 feeds back a HARQ to the terminal device 1, and the terminal device 1 sends the HARQ to the network device by using a PUCCH 1. The terminal device 3 also feeds back a HARQ to the terminal device 1, and the terminal device 1 sends the HARQ to the network device by using a PUCCH 2. The PUCCH 1 and the PUCCH 2 may conflict with each other. This may lead to a HARQ feedback failure. In addition, because the terminal device 1 needs to feed back a plurality of sidelink HARQs to the network device on a plurality of PUCCHs, a probability that a PUCCH resource for sending a downlink HARQ and a PUCCH resource for sending a sidelink HARQ overlap in time domain increases. Consequently, normal operation of a HARQ feedback mechanism cannot be ensured, spectrum utilization is relatively low, and data transmission reliability is reduced.

Therefore, an embodiment of this application further provides a feedback information determining method. All possible sidelink HARQs that need to be sent by a sending device to a network device are determined, and all the possible sidelink HARQs are jointly used to generate a semi-static HARQ codebook. This can resolve a resource conflict problem that occurs when the sending device needs to send a plurality of sidelink HARQs on a plurality of resources, improve spectrum utilization, and improve reliability of sidelink HARQ feedback.

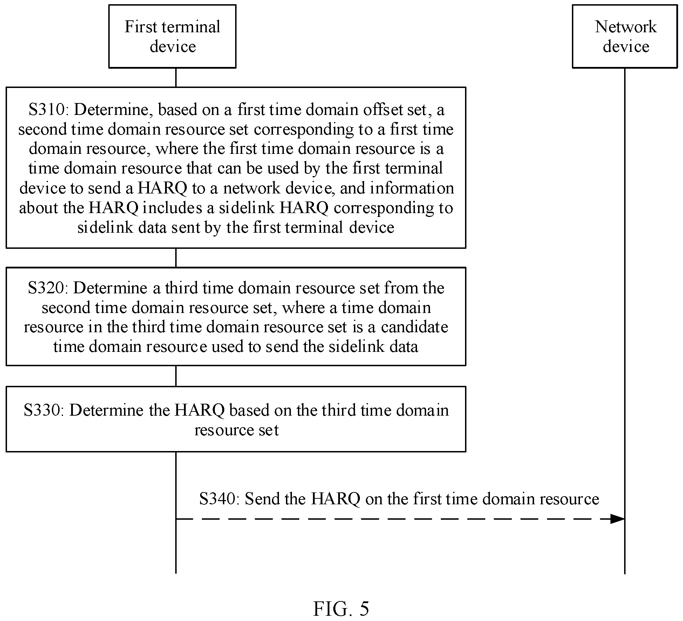

As shown in FIG. 5, the feedback information determining method 300 shown in FIG. 5 may include step S310 to step S230. The method shown in FIG. 5 may be applied to the communications systems shown in FIG. 1 and FIG. 2. The following describes steps in the method 300 in detail with reference to FIG. 5.

S310: A first terminal device determines, based on a first time domain offset set, a second time domain resource set corresponding to a first time domain resource, where the first time domain resource is a time domain resource that can be used by the first terminal device to send a hybrid automatic repeat request HARQ to a network device, and the HARQ includes a sidelink HARQ corresponding to sidelink data sent by the first terminal device.

S320: The first terminal device determines a third time domain resource set from the second time domain resource set, where a time domain resource in the third time domain resource set is a candidate time domain resource used to send the sidelink data.

S330: The first terminal device determines the HARQ based on the third time domain resource set.

Optionally, the method 300 may further include S340.

S340: The first terminal device sends the HARQ to the network device on the first time domain resource. Correspondingly, the network device receives the HARQ on the first time domain resource.

Specifically, in S310, the first terminal device may determine the first time domain resource based on a frame structure configuration. The first time domain resource is an uplink time domain resource, and may be used by the first terminal device to send uplink data or information to the network device. For example, the first time domain resource may be a plurality of uplink symbols, one uplink subslot, one uplink slot, one uplink subframe, one uplink radio frame, or the like. Alternatively, the first time domain resource includes at least one uplink time domain symbol. Specifically, the first time domain resource may be used by the first terminal device to send the HARQ to the network device. The first time domain resource may be understood as a time domain resource of a first PUCCH. The HARQ includes the sidelink HARQ corresponding to the sidelink data sent by the first terminal device. It should be understood that the sidelink data herein includes sidelink data sent by the first terminal device to one or more terminal devices. In other words, there may be a plurality of pieces of sidelink data. For example, the first terminal device may send the sidelink data to a plurality of other terminal devices in a unicast data transmission manner or a multicast data transmission manner. Each terminal device receiving the sidelink data may feed back, to the first terminal device by using a PSFCH between the terminal device and the first terminal device, a sidelink HARQ corresponding to sidelink data received by the terminal device. In other words, there may be a plurality of pieces of data corresponding to the sidelink HARQ.

After determining the first time domain resource, the first terminal device may determine, based on the first time domain offset set, the second time domain resource set corresponding to the first time domain resource. The second time domain resource set may include at least one of a sidelink resource used to transmit the sidelink data, an uplink resource used to transmit uplink data, and a downlink resource used to transmit downlink data. The uplink data is data sent by the first terminal device to the network device. For example, the second time domain resource set may include a union set of a sidelink slot, an uplink slot, and a downlink slot. The sidelink slot is used to transmit the sidelink data. The sidelink slot may include a slot in which all symbols can be used to transmit the sidelink data, or include a slot in which only some symbols are used to transmit the sidelink data. In other words, the sidelink slot may be used to schedule uplink transmission or downlink transmission. The uplink slot may include a slot in which all symbols can be used to transmit the uplink data, or include a slot in which only some symbols are used to transmit the uplink data. The downlink slot may include a slot in which all symbols can be used to transmit the downlink data, or include a slot in which only some symbols are used to transmit the downlink data. In other words, the uplink slot, the downlink slot, and the sidelink slot may be a same slot, or may be different slots. It should be understood that a slot may be a sidelink slot, an uplink slot, and a downlink slot. If the slot includes a sidelink symbol, an uplink symbol, and a downlink symbol, the slot is a sidelink slot, an uplink slot, and a downlink slot.

A set including the sidelink resources used to transmit the sidelink data may be understood as a resource pool for sidelink data transmission. Only resources in the resource pool can be used to transmit the sidelink data. In other words, the second time domain resource set includes a time domain resource in the resource pool and a time domain resource outside the resource pool, and the time domain resource outside the resource pool may be used only to transmit the downlink data or the uplink data, and cannot be used to transmit the sidelink data. The first terminal device may send the sidelink data to one or more other terminal devices by using only the time domain resource in the resource pool. A granularity of a time domain resource included in the second time domain resource set may be a symbol, a slot, a subframe, a radio frame, or the like.

In S320, after the first terminal device determines the second time domain resource set, because the second time domain resource set includes the time domain resource in the resource pool and the time domain resource outside the resource pool, the third time domain resource set further needs to be determined from the second time domain resource. The time domain resource included in the third time domain resource set is the time domain resource in the resource pool, and may be used by the first terminal device to send the sidelink data to one or more other terminal devices. In other words, the network device may allocate, only to the first terminal device in the first time domain resource set, the sidelink resource used for sidelink transmission. In other words, the first terminal device may send the sidelink data on any time domain resource included in the third time domain resource set. A granularity of a time domain resource included in the third time domain resource set may be a symbol, a slot, a subframe, a radio frame, or the like.

In S330, after determining the third time domain resource set, the first terminal device may determine a maximum quantity of pieces of sidelink data that can be sent by the first terminal device, to determine a maximum quantity of bits (bit) of a HARQ that the first terminal device needs to feed back to the network device. Therefore, the first terminal device may reserve one bit for each location at which the sidelink data may appear, to fill an ACK or a NACK. If CBG-based feedback is configured for a sidelink, the first terminal device may reserve M bits for each location at which the sidelink data may appear, to fill an ACK or a NACK. M is a quantity of CBGs that can be configured for one TB. For example, assuming that the third time domain resource set includes 10 slots, the first terminal device may send a total of 10 pieces of data (for example, 10 TBs). In this case, the first terminal device may reserve one bit for each slot, and determine that the downlink HARQ has 10 bits. In addition, each bit corresponds to one slot, and a relative location of each bit is the same as a corresponding relative location in time domain. For example, an N^{th} bit in the 10 bits corresponds to sidelink data in an N^{th} slot in the 10 slots.

The first terminal device may send the sidelink data to one or more other terminal devices on the time domain resource included in the third time domain resource set. For example, the third time domain resource set may be divided into two parts. The first part is a time domain resource actually used by the first terminal device to send the sidelink data, and the second part is an unused time domain resource. HARQs corresponding to the first part are all NACKs. For the second part, another terminal device that receives the sidelink data feeds back an ACK or a NACK to the first terminal device. The first terminal device fills an ACK or a NACK at a corresponding bit location based on the received ACK or NACK. If the sidelink data sent by the first terminal device is broadcast, the first terminal device does not receive feedback information from the another terminal device, and the first terminal device fills an ACK at the corresponding bit location. If the sidelink data sent by the first terminal device is unicast or multicast, but the another terminal device does not feed back an ACK or a NACK (that is, DTX occurs), the first terminal device fills a NACK at the corresponding bit location. In this way, the first terminal device determines the sidelink HARQ.

In S340, because the HARQ may include only the sidelink HARQ, after determining the sidelink HARQ, the first terminal may send the sidelink HARQ to the network device on the first time domain resource.

According to the feedback information determining method provided in this application, all time domain resources that may be used to send the sidelink data are determined based on the first time domain offset set and an uplink time domain resource that may be used to send the sidelink HARQ, corresponding HARQ bit positions are reserved for all the sidelink data that may be sent, and all possible sidelink HARQs are jointly used to generate a semi-static HARQ codebook, to ensure that all the possible sidelink HARQs can be normally fed back. This can resolve a problem of a resource conflict when one sending device needs to send a plurality of sidelink HARQs on a plurality of resources, improve spectrum utilization, and improve data transmission reliability. In addition, bits are semi-statically reserved for each possible sidelink transmission, to ensure that the network device and the first terminal device have a consistent understanding of the sidelink HARQ, and no confusion occurs.

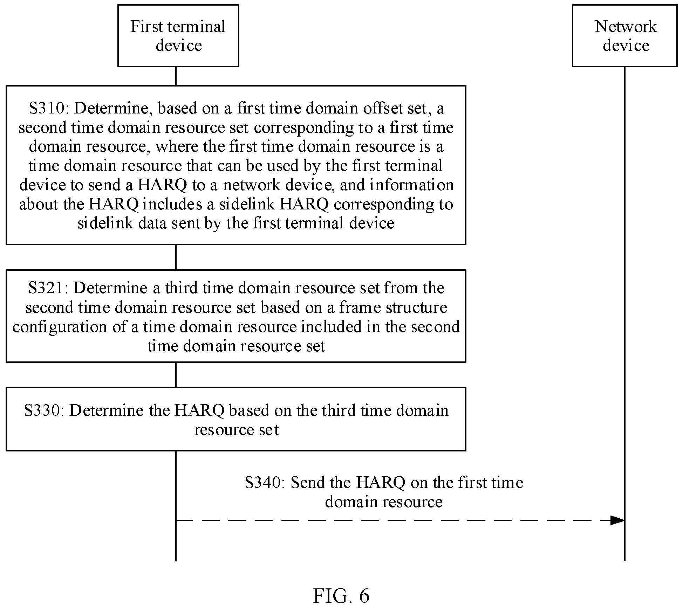

Optionally, in some possible implementations of this application, FIG. 6 is a schematic flowchart of a feedback information determining method according to some embodiments of this application. Based on the method steps shown in FIG. 6, in S320 in the method, that the first terminal device determines the third time domain resource set from the second time domain resource set may include S321.

S321: The first terminal device determines the third time domain resource set from the second time domain resource set based on a frame structure configuration of the time domain resource included in the second time domain resource set.

For steps S310, S330, and S340 shown in FIG. 6, refer to the foregoing related descriptions of S310, S330, and S340. For brevity, details are not described herein again.

In S321, because the second time domain resource set includes the time domain resource in the resource pool and the time domain resource outside the resource pool, only the resource in the resource pool may be used to transmit the sidelink data. Therefore, the first terminal device may determine, from the second time domain resource set based on the frame structure configuration of the time domain resource included in the second time domain resource set, the third time domain resource set that can be used for sidelink transmission. In other words, the third time domain resource set includes only the time domain resource in the resource pool. The frame structure configuration may be understood as configuring a time domain resource as an uplink time domain resource, a downlink time domain resource, or a sidelink time domain resource. The resource pool is a set of resources that are determined by using the frame structure configuration and that can be used for sidelink transmission. For example, the second time domain resource set includes a slot 1 to a slot 10, and sidelink slots are configured for the slot 1, the slot 3, the slot 4, the slot 5, and the slot 10. It should be understood that, in one sidelink slot, all symbols may be used to transmit the sidelink data, or only some symbols are used to transmit the sidelink data, and none of remaining slots is a sidelink slot. In this case, the third time domain resource set includes the slot 1, the slot 3, the slot 4, the slot 5, and the slot 10. To be specific, the resource pool includes the slot 1, the slot 3, the slot 4, the slot 5, and the slot 10. In other words, the slot 1, the slot 3, the slot 4, the slot 5, and the slot 10 may be used for sidelink transmission. The first terminal device may reserve a 1-bit HARQ for each of the five slots. In a 5-bit (bit) HARQ, the first bit corresponds to a HARQ for sidelink data transmitted in the slot 1, the second bit corresponds to a HARQ for sidelink data transmitted in the slot 3, the third bit corresponds to a HARQ for sidelink data transmitted in the slot 4, the fourth bit corresponds to a HARQ for sidelink data transmitted in the slot 5, and the fifth bit corresponds to a HARQ for sidelink data transmitted in the slot 10. In other words, the first terminal device may determine the size of the sidelink HARQ and a relative location of each bit based on the third time domain resource set.

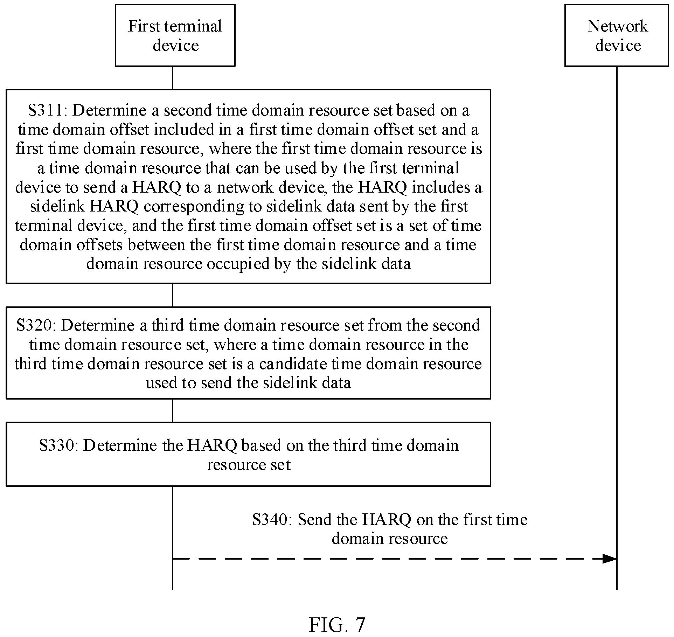

Optionally, in some possible implementations of this application, when the first time domain offset set is a set of time domain offsets between the first time domain resource and a time domain resource occupied by the sidelink data, FIG. 7 is a schematic flowchart of a feedback information determining method according to some embodiments of this application. Based on the method steps shown in FIG. 5, in S310 in the method, that the first terminal device determines, based on the first time domain offset set, the second time domain resource set corresponding to the first time domain resource may include S311.

S311: The first terminal device determines the second time domain resource set based on the time domain offsets included in the first time domain offset set and the first time domain resource.

For steps S320, S330, and S340 shown in FIG. 7, refer to the foregoing related descriptions of S320, S330, and S340. For brevity, details are not described herein again.

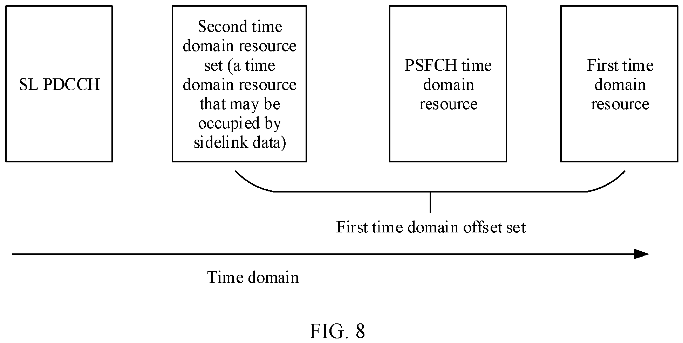

In S311, when the first time domain offset set is the set of the time domain offsets between the first time domain resource and the time domain resource occupied by the sidelink data, optionally, the first time domain offset set may be referred to as a {PSSCH-to-PUCCH timing} set. A PUCCH may be understood as the first time domain resource, and a PSSCH may be understood as the sidelink data or the time domain resource occupied by the sidelink data. The time domain offsets may include a subslot offset, a slot offset, a subframe offset, a radio frame offset, and the like. The slot offset is used as an example for description. FIG. 8 is a schematic diagram in which a first time domain offset is the time domain offset between the first time domain resource and the time domain resource occupied by the sidelink data. In FIG. 8, an SL PDCCH is used to schedule the sidelink resource, and the sidelink resource may be used by the first terminal to send the sidelink data. The second time domain resource set includes a plurality of time domain resources (for example, which may include a plurality of slots). A PSFCH resource may be understood as a resource used by the first terminal device to receive a sidelink HARQ that is for the sidelink link and that is sent by another terminal device. It is assumed that the first time domain offset set is {4, 5, 6, 7, 8}. If the first time domain resource is a slot n, it may be determined that the second time domain resource set includes a slot n-8, a slot n-7, a slot n-6, a slot n-5, and a slot n-4. The slot n-8, the slot n-7, the slot n-6, the slot n-5, and the slot n-4 may include at least one of an uplink slot, a downlink slot, and a sidelink slot. Assuming that the slot n-7, the slot n-6, and the slot n-4 are sidelink slots, the size of the sidelink HARQ and the relative location of each bit may be determined based on the slot n-7, the slot n-6, and the slot n-4. The sidelink HARQ has three bits. The first bit corresponds to a HARQ for sidelink data transmitted in the slot n-7, the second bit corresponds to a HARQ for sidelink data transmitted in the slot n-6, and the third bit corresponds to a HARQ for sidelink data transmitted in the slot n-4.

It should be understood that the first time domain offset set may be predefined in a protocol or configured by the network device by using signaling.

It should be further understood that a smallest value in the time domain offsets included in the first time domain offset set need to be greater than or equal to K, and K may be understood as a time domain offset between the sidelink HARQ and the corresponding sidelink data.

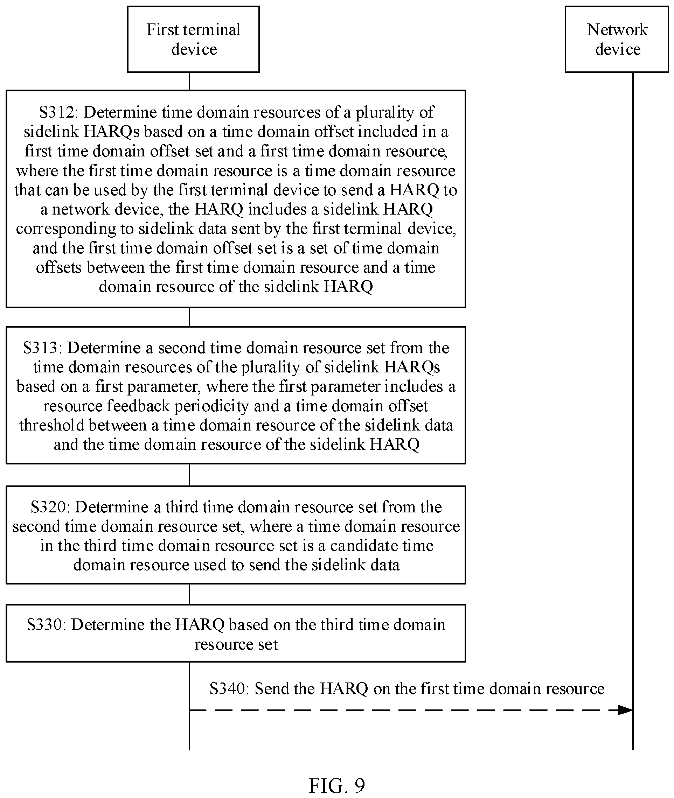

Optionally, in some possible implementations of this application, the first time domain offset set is a set of time domain offsets between the first time domain resource and a time domain resource of the sidelink HARQ, and the time domain resource of the sidelink HARQ is a time domain resource on which the first terminal device receives the sidelink HARQ. FIG. 9 is a schematic flowchart of a feedback information determining method according to some embodiments of this application. Based on the method steps shown in FIG. 5, in S310 in the method, that the first terminal device determines, based on the first time domain offset set, the second time domain resource set corresponding to the first time domain resource may include S312 and S313.

S312: The first terminal device determines time domain resources of a plurality of sidelink HARQs based on the time domain offsets included in the first time domain offset set and the first time domain resource.

S313: The first terminal device determines the second time domain resource set from the time domain resources of the plurality of sidelink HARQs based on a first parameter, where the first parameter includes a resource feedback periodicity and a time domain offset between a time domain resource of the sidelink data and the time domain resource of the sidelink HARQ. The resource feedback periodicity is a set of resources that can be used to transmit sidelink feedback information. A value of the resource feedback periodicity configured in the set of resources used for sidelink transmission may be 1, 2, 4, or the like.

For steps S320, S330, and S340 shown in FIG. 9, refer to the foregoing related descriptions of S320, S330, and S340. For brevity, details are not described herein again.

In S312, when the first time domain offset set is a set of time domain offsets between the first time domain resource and the time domain resource of the sidelink HARQ, the first time domain offset set may be referred to as a {PSFCH-to-PUCCH timing} set. APUCCH may be understood as the first time domain resource, and a PSFCH may be understood as a resource occupied by the sidelink HARQ. The time domain resource of the sidelink HARQ is a time domain resource on which the first terminal device receives a sidelink HARQ sent by another terminal device.

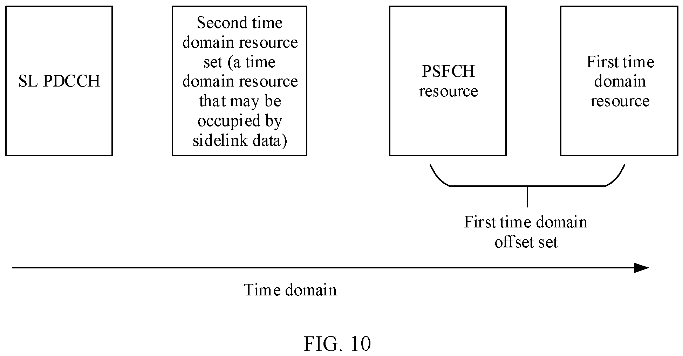

FIG. 10 is a schematic diagram in which a first time domain offset is the time domain offset between the first time domain resource and the time domain resource occupied by the sidelink data. In FIG. 10, an SL PDCCH is used to schedule the sidelink resource, and the sidelink resource may be used by the first terminal to send the sidelink data. The second time domain resource set includes a plurality of time domain resources (for example, which may include a plurality of slots). A PFSCH resource may be understood as a time domain resource used by the first terminal device to receive a sidelink HARQ that is for the sidelink link and that is sent by another terminal device. It is assumed that the first time domain offset set is {2, 3, 4}. If the first time domain resource is a slot n, it may be determined that the time domain resource of the sidelink HARQ includes a slot n-4, a slot n-3, and a slot n-2. The first terminal device may receive, in these slots, sidelink HARQs that are for the sidelink data and that are sent by another terminal device.

In S313, the first terminal device determines the second time domain resource set from the time domain resources of the plurality of sidelink HARQs based on the first parameter. The first parameter includes a resource feedback periodicity N and a time domain offset between the time domain resource (a PSSCH) of the sidelink data and the time domain resource (a time domain resource of the PSFCH) of the sidelink HARQ. The time domain offset between the time domain resource of the sidelink data and the time domain resource of the sidelink HARQ may be K, and K may be understood as the time domain offset between the sidelink HARQ and the corresponding sidelink data. The resource feedback periodicity N may be understood as a time domain interval (for example, a slot interval) between two adjacent time domain resources used to transmit the sidelink feedback information in one time domain resource set used for sidelink transmission.

For example, it is assumed that N is equal to 4, and K is 2. The time domain resource of the sidelink HARQ includes a slot n-4, a slot n-3, and a slot n-2.

First, the slot n-2 used to transmit the sidelink feedback information is determined. If K is a logical quantity of time domain resources, a logical time domain resource index is an index of a time domain resource that is in a resource set and that can be used for sidelink transmission. If a logical index corresponding to the slot n-2 is a slot m, a slot m-1 is excluded based on a value 2 of K because if HARQ feedback of sidelink transmission at slot m-1 is at slot m, then K is 1. Then, it is determined based on a value of N that a slot m-5, a slot m-4, a slot m-3, and a slot m-2 are corresponding slots that need to send the sidelink feedback information in the slot m and that can be used to transmit the sidelink data. In other words, the slot set is M1={slot m-5, slot m-4, slot m-3, slot m-2}.

The same steps are performed in the slots n-3 and n-4 in which the sidelink feedback information is transmitted. Corresponding slot sets M2 and M3 that can be used to transmit the sidelink data may be determined, and then a union set is determined based on M1, M2, and M3. For each slot in the union set, the first terminal device reserves 1-bit information. In other words, the union set is the third time domain resource set. A quantity of third time domain resources is a quantity of bits of the sidelink HARQ, and a sequence of the time domain resources in the time domain resource set is a sequence in the corresponding HARQ.

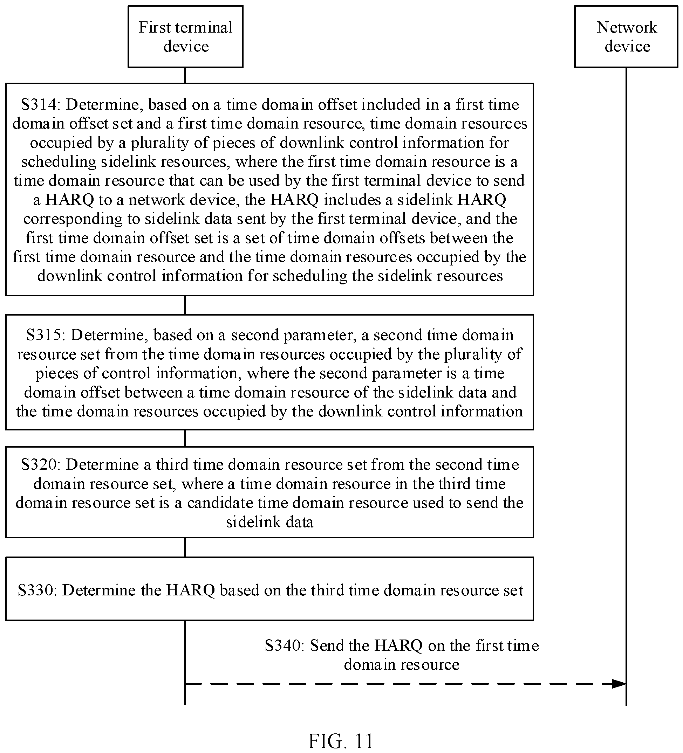

Optionally, in some possible implementations of this application, the first time domain offset set is a set of time domain offsets between the first time domain resource and a time domain resource occupied by downlink control information for scheduling a sidelink resource, the sidelink resource is used by the first terminal device to send the sidelink data. FIG. 11 is a schematic flowchart of a feedback information determining method according to some embodiments of this application. Based on the method steps shown in FIG. 5, in S310 in the method, that the first terminal device determines, based on the first time domain offset set, the second time domain resource set corresponding to the first time domain resource may include S314 and S315.

S314: The first terminal device determines, based on the time domain offsets included in the first time domain offset set and the first time domain resource, time domain resources occupied by a plurality of pieces of downlink control information for scheduling the sidelink resource.

S315: The first terminal device determines, based on a second parameter, the second time domain resource set from the time domain resources occupied by the plurality of pieces of control information, where the second parameter is a time domain offset between the time domain resource of the sidelink data and the time domain resources occupied by the downlink control information.

For steps S320, S330, and S340 shown in FIG. 11, refer to the foregoing related descriptions of S320, S330, and S340. For brevity, details are not described herein again.

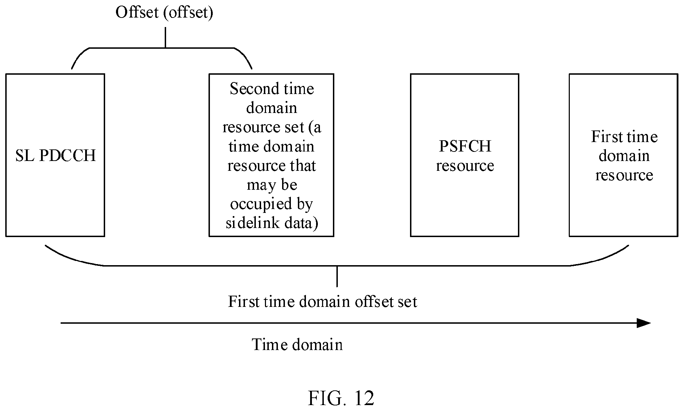

In S314, when the first time domain offset set is a set of time domain offsets between the first time domain resource and the time domain resources occupied by the downlink control information for scheduling the sidelink resource, the first time domain offset set may be referred to as a {SL PDCCH-to-PUCCH timing} set. A PUCCH may be understood as the first time domain resource, an SL PDCCH may be understood as the downlink control information for scheduling the sidelink resource, and the sidelink resource is used by the first terminal device to send the sidelink data. FIG. 12 is a schematic diagram when the first time domain offset set is a set of time domain offsets between the first time domain resource and the time domain resources occupied by the downlink control information for scheduling the sidelink resource. In FIG. 12, the SL PDCCH is equivalent to the downlink control information for scheduling the sidelink resource, and is used to schedule the sidelink resource. The second time domain resource set includes a plurality of time domain resources (for example, which may include a plurality of slots). A PSFCH resource may be understood as a resource used by the first terminal device to receive a sidelink HARQ that is for the sidelink link and that is sent by another terminal device. It is assumed that the first time domain offset set is {6, 7, 8}. If the first time domain resource is a slot n, it may be determined that the time domain resources occupied by the downlink control information for scheduling the sidelink resource include a slot n-8, a slot n-7, and a slot n-6. In other words, the first terminal device may receive, in the slot n-8, the slot n-7, and the slot n-6, the downlink control information that is sent by the network device and that is used to schedule the sidelink resource.

In S315, the first terminal device determines, based on the second parameter, the second time domain resource set from the time domain resources occupied by the plurality of pieces of control information, where the second parameter is the time domain offset (offset) between the time domain resource of the sidelink data and the time domain resources occupied by the downlink control information. Assuming that the offset is 3, and the time domain resources occupied by the plurality of pieces of control information include the slot n-8, the slot n-7, and the slot n-6, the determined second time domain resource set includes a slot n-5, a slot n-4, and a slot n-3. The first terminal device may determine bits of the sidelink HARQ based on frame structure configurations of the slot n-5, the slot n-4, and the slot n-3, that is, whether a sidelink symbol is configured for the slot n-5, the slot n-4, and the slot n-3 (which may also be understood as whether the slot n-5, the slot n-4, and the slot n-3 include a resource used for sidelink transmission).

In the feedback information determining method provided in this application, all time domain resources that may be used to send the sidelink data are determined based on different time domain offset sets and the first time domain resource used to send the sidelink HARQ, corresponding HARQ bits are reserved for all the sidelink data that may be sent, and all possible sidelink HARQs are jointly used to generate a semi-static HARQ codebook. In this way, a communication error caused by that the network device and the first terminal device have inconsistent understandings of a quantity of HARQ bits sent to the network device and a corresponding sequence due to a loss of an SL PDCCH is avoided. This can improve HARQ feedback reliability. In addition, compared with separate feedback of one HARQ for sidelink transmission, a plurality of HARQs for sidelink transmission are fed back together. This can improve spectrum utilization, reduce a probability of a conflict between a plurality of resources used for HARQ transmission, and reduce implementation complexity of the terminal device.

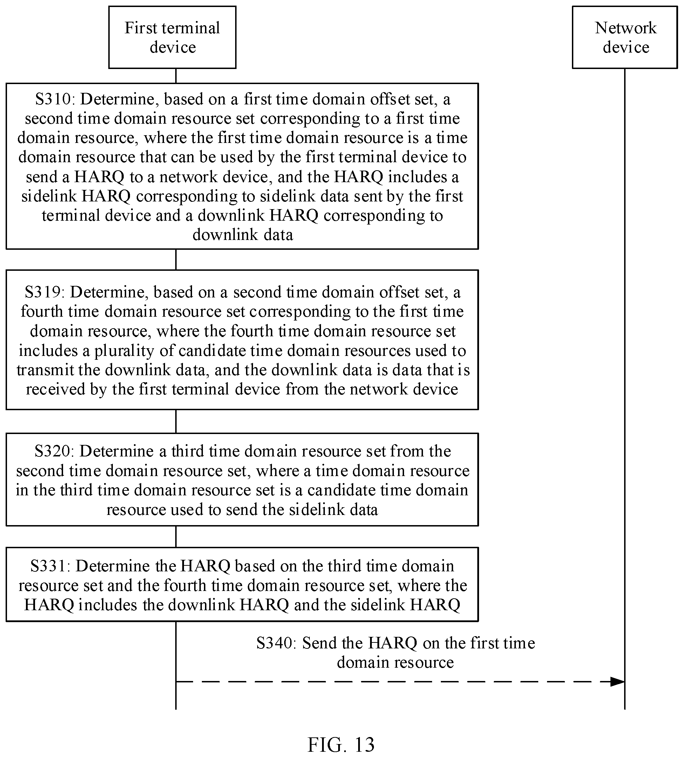

Optionally, in some possible implementations of this application, in S340, the HARQ sent by the first terminal device to the network device on the first time domain resource further includes a downlink HARQ corresponding to downlink data, where the downlink data is data that is received by the first terminal device from the network device. FIG. 13 is a schematic flowchart of a feedback information determining method according to some embodiments of this application. Based on the method steps shown in FIG. 5, the method may further include S319.

S319: The first terminal device determines, based on a second time domain offset set, a fourth time domain resource set corresponding to the first time domain resource, where the fourth time domain resource set includes a plurality of candidate time domain resources used to transmit the downlink data, and the downlink data is the data that is received by the first terminal device from the network device.

In S330 in the method 300, that the first terminal device determines the HARQ based on the third time domain resource set may include S331.

S331: The first terminal device determines the HARQ based on the third time domain resource set and the fourth time domain resource set. The HARQ includes the downlink HARQ and the sidelink HARQ.

For steps S310, S320, and S340 shown in FIG. 13, refer to the foregoing related descriptions of S310, S320, and S340. For brevity, details are not described herein again.

In S319, because the first terminal device may further receive the downlink data sent by the network device, the first terminal device also needs to send, to the network device, the downlink HARQ corresponding to the downlink data. The first time domain resource determined in S310 may be used by the first terminal device to send the downlink HARQ to the network device. In other words, the HARQ further includes the downlink HARQ. In this case, the first terminal device further needs to determine the downlink HARQ. The first terminal device may determine, based on the second time domain offset set, the fourth time domain resource set corresponding to the first time domain resource. The fourth time domain resource set includes the plurality of candidate time domain resources used to transmit the downlink data. It should be understood that the fourth time domain resource set may include an uplink time domain resource and/or a downlink time domain resource, and the network device may send the downlink data to the first terminal device only on the downlink time domain resource. A granularity of a time domain resource included in the fourth time domain resource set may be a symbol, a slot, a subframe, a radio frame, or the like. The second time domain offset set may be a time domain offset between the first time domain resource and the candidate time domain resources used to transmit the downlink data. In other words, the second time domain offset set may be {PDSCH-to-HARQ feedback timing}. The time domain offsets may include a subslot offset, a slot offset, a subframe offset, a radio frame offset, and the like. The slot offset is used as an example for description. It is assumed that the second time domain offset set is {2, 3, 4, 5, 6}. If the first time domain resource is a slot n, it may be determined that the fourth time domain resource set includes a slot n-6, a slot n-5, a slot n-4, a slot n-3, and a slot n-2. The slot n-6, the slot n-5, the slot n-4, the slot n-3, and the slot n-2 may include an uplink slot and/or a downlink slot.

It should be understood that some time domain resources included in the third time domain resource set may overlap some time domain resources included in the fourth time domain resource set. In other words, there may be an intersection set between the third time domain resource set and the fourth time domain resource set.

In S331, the first terminal device determines the HARQ based on the third time domain resource set and the fourth time domain resource set. In other words, the first terminal device determines the HARQ based on time domain resources included in a union set of the third time domain resource set and the fourth time domain resource set. The HARQ includes the downlink HARQ and the sidelink HARQ.

For example, the first terminal device may traverse the time domain resources included in the union set of the third time domain resource set and the fourth time domain resource set, to determine a HARQ corresponding to each time domain resource. The HARQ includes the downlink HARQ and the sidelink HARQ.

For example, the determined third time domain resource set includes the slot n-7, the slot n-6, and the slot n-4, and the determined fourth time domain resource set includes the slot n-6, the slot n-5, the slot n-4, the slot n-3, and the slot n-2. In this case, the first terminal device needs to determine the HARQ based on the slot n-7, the slot n-6, the slot n-5, the slot n-4, the slot n-3, and the slot n-2.

Optionally, the first terminal device may determine the HARQ based on a frame structure configuration of the time domain resource included in the third time domain resource set and a frame structure configuration of the time domain resource included in the fourth time domain resource set.

For example, it is assumed that the union set of the third time domain resource set and the fourth time domain resource set includes the slot n-7, the slot n-6, the slot n-5, the slot n-4, the slot n-3, and the slot n-2. It is assumed that the sidelink data can be sent in the slot n-7, the slot n-6, and the slot n-5, and the downlink data can be sent only in the slot n-3 and the slot n-2. A maximum of one piece of downlink data can be sent in either of the slot n-3 and the slot n-2. In this case, the HARQ may include a 5-bit HARQ. A sequence in the 5-bitHARQ is an ascending order of corresponding slot indexes. The first bit corresponds to a HARQ for sidelink data transmitted in the slot n-7, the second bit corresponds to a HARQ for sidelink data transmitted in the slot n-6, and the third bit corresponds to a HARQ for sidelink data transmitted in the slot n-5. The fourth bit corresponds to a HARQ for downlink data transmitted in the slot n-3, and the fifth bit corresponds to a HARQ for downlink data transmitted in the slot n-2.

It should be further understood that, for a time domain resource (for example, a slot), some symbols may be used to transmit the sidelink data, and the other symbols may be used to transmit the downlink data. In this case, the slot may correspond to a multi-bit HARQ, the multi-bit HARQ includes the sidelink HARQ corresponding to the sidelink data and the downlink HARQ corresponding to the downlink data. For example, there is a downlink symbol and a sidelink symbol in one slot. If the first terminal device can receive a maximum of one PDSCH in each slot, the slot corresponds to a 2-bit HARQ. The first bit is a downlink HARQ, and the last bit is a sidelink HARQ. Optionally, the sidelink data may correspond to only a 1-bit HARQ.

According to the feedback information determining method provided in this application, the sidelink HARQ and the downlink HARQ that are sent on the first time domain resource are determined based on different time domain offset sets. In other words, the sidelink HARQ and the downlink HARQ are jointly used to generate a semi-static HARQ codebook. This avoids a communication error caused by that the network device and the first terminal device have inconsistent understandings of a quantity of HARQ bits sent to the network device and a corresponding sequence due to a loss of the SL PDCCH. This improves HARQ feedback reliability. In addition, compared with separate feedback of one HARQ for sidelink transmission, a plurality of HARQs for sidelink transmission are fed back together. This reduces a probability of a conflict between a plurality of resources used for HARQ transmission, and reduces implementation complexity of the terminal device. This further improves spectrum utilization and data transmission reliability.

An embodiment of this application further provides a feedback information transmission method. A time domain resource of first downlink control information used to schedule a sidelink resource is determined based on different time domain offset sets, and the sidelink resource is used to transmit sidelink data. Sidelink HARQs for sidelink data corresponding to all the detected first downlink control information are determined on the time domain resource based on all the detected first downlink control information, and the sidelink HARQs are jointly used to generate a dynamic HARQ codebook. Compared with a resource conflict that may be caused when a transmission resource is separately used to transmit the sidelink HARQ and the downlink HARQ, this can resolve a problem that the sending device needs to transmit the sidelink HARQ and the downlink HARQ in a same slot, improve spectrum utilization, improve data transmission reliability, and reduce implementation complexity of the terminal device.

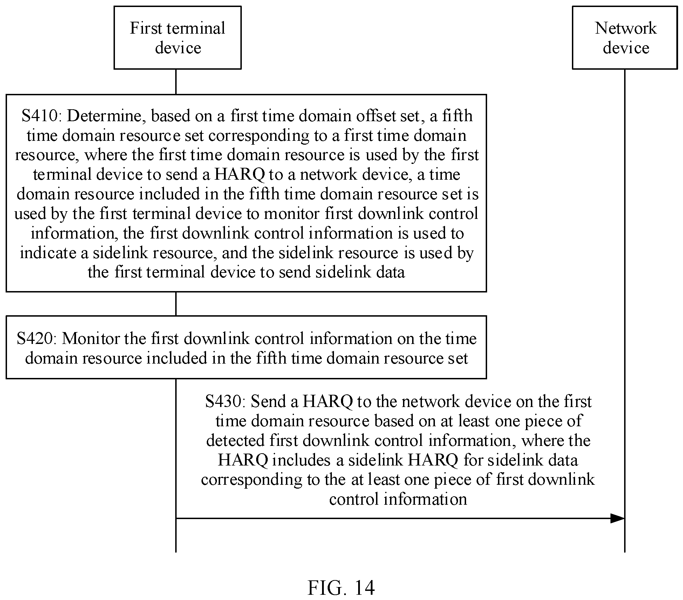

As shown in FIG. 14, the feedback information determining method 400 shown in FIG. 14 may include step S410 to step S430. The method shown in FIG. 14 may be applied to the communications systems shown in FIG. 1 and FIG. 2. The following describes steps in the method 400 in detail with reference to FIG. 14.

S410: A first terminal device determines, based on a first time domain offset set, a fifth time domain resource set corresponding to a first time domain resource, where the first time domain resource is used by the first terminal device to send a hybrid automatic repeat request HARQ to a network device, the first time domain offset set corresponds to a sidelink, a time domain resource included in the fifth time domain resource set is used by the first terminal device to monitor first downlink control information, the first downlink control information is used to indicate a sidelink resource, and the sidelink resource is used by the first terminal device to send sidelink data.

S420: The first terminal device monitors the first downlink control information on the time domain resource included in the fifth time domain resource set.

S430: The first terminal device sends a HARQ to the network device on the first time domain resource based on at least one piece of detected first downlink control information, where the HARQ includes a sidelink HARQ for sidelink data corresponding to the at least one piece of first downlink control information. Correspondingly, the network device receives, on the first time domain resource, the HARQ sent by the first terminal device.

In S410, the first terminal device may determine the first time domain resource based on a frame structure configuration. The first time domain resource is an uplink time domain resource, and may be used by the first terminal device to send uplink data or information to the network device. For example, the first time domain resource may be a plurality of uplink symbols, one uplink subslot, one uplink slot, one uplink subframe, one uplink radio frame, or the like. Alternatively, the first time domain resource includes at least one uplink time domain symbol. Specifically, the first time domain resource may be used by the first terminal device to send the HARQ to the network device. The first time domain resource may be understood as a time domain resource of a first PUCCH. The HARQ includes the sidelink HARQ corresponding to the sidelink data sent by the first terminal device. It should be understood that the sidelink data herein includes sidelink data sent by the first terminal device to one or more terminal devices. In other words, there may be a plurality of pieces of sidelink data. For example, the first terminal device may send the sidelink data to a plurality of other terminal devices in a unicast data transmission manner or a multicast data transmission manner. Each terminal device receiving the sidelink data may feed back, to the first terminal device by using a PSFCH between the terminal device and the first terminal device, a sidelink HARQ corresponding to sidelink data received by the terminal device. In other words, there may be a plurality of pieces of data corresponding to the sidelink HARQ, and the sidelink HARQ includes at least one HARQ bit.

After determining the first time domain resource, the first terminal device may determine, based on the first time domain offset set, the fifth time domain resource set corresponding to the first time domain resource. The first time domain offset set corresponds to a sidelink. In other words, the first time domain offset set is applicable to determining of a time domain resource related to the sidelink. The time domain resource included in the fifth time domain resource set may be used by the first terminal device to monitor the first downlink control information (for example, which may be an SL PDCCH or SL DCI). The first downlink control information is used to indicate the sidelink resource, and the sidelink resource is used by the first terminal device to send the sidelink data. It should be understood that when the first terminal device monitors the first downlink control information on the time domain resource included in the fifth time domain resource set, a monitoring result may be that one or more pieces of first downlink control information are detected, or the first downlink control information may not be detected. In other words, the network device may send the one or more pieces of first downlink control information to the first terminal device on the time domain resource included in the fifth time domain resource set, or may not send the first downlink control information. A granularity of a time domain resource included in the fifth time domain resource set may be a symbol, a slot, a subframe, a radio frame, or the like.

In S420, the first terminal device monitors the first downlink control information on the time domain resource included in the fifth time domain resource set.

In S430, the first terminal device may determine, based on the at least one piece of detected first downlink control information, the sidelink data that can be sent by the first terminal device. Because the first downlink control information is used to schedule the sidelink resource, the first terminal device may send the sidelink data to one or more other terminal devices on the sidelink resource. Therefore, the sidelink resource may be determined based on the at least one piece of detected first downlink control information. For example, assuming that the first terminal device detects five pieces of first downlink control information, and one piece of first downlink control information schedules one sidelink resource, to transmit one TB, it may be determined that the first terminal device needs to send five TBs if it is assumed that each TB corresponds to a 1-bit sidelink HARQ. In this case, the sidelink HARQ transmitted on the first time domain resource has five bits. If the HARQ includes only the sidelink HARQ, it may be determined that the HARQ has five bits, and the five bits respectively correspond to the five TBs sent by the first terminal device. The first terminal device may send the HARQ to the network device on the first time domain resource after determining the HARQ. Correspondingly, the network device receives the HARQ.

Optionally, the first terminal device may determine, based on the at least one piece of detected first downlink control information, the sidelink data that can be sent by the first terminal device. The first downlink control information includes a sidelink-downlink assignment indicator (sidelink-downlink assignment indicator, SL-DAI) field. On a single carrier, a value of the field indicates an accumulated quantity of SL PDCCHs that indicate the sidelink resource and that are received in a PDCCH monitoring slot, and an accumulation sequence is an ascending order of indexes of PDCCH monitoring occasions. In carrier aggregation, a value of the field indicates an accumulated quantity of SL PDCCHs that indicate the sidelink resource and that are received by a serving cell in a PDCCH monitoring slot. An accumulation sequence is first an ascending order of indexes of serving cells, and then an ascending order of indexes of PDCCH monitoring occasions. In this way, it can be avoided that the first terminal device and the network device understand the HARQ differently because the first terminal device loses DCI.

According to the feedback information determining method provided in this application, based on the first time domain resource used to send the sidelink HARQ and the fifth time domain offset set, the time domain resource included in the fifth time domain resource set is used by the first terminal device to monitor the first downlink control information, the first downlink control information is used to indicate the sidelink resource, and the sidelink resource is used by the first terminal device to send the sidelink data. The sidelink HARQ corresponding to the sidelink data is determined based on the at least one piece of first downlink control information detected on the time domain resource included in the fifth time domain resource set, and all the sidelink HARQs are jointly used to generate a dynamic HARQ codebook, to resolve a problem that a transmission resource conflict occurs because a sending device needs to separately transmit a HARQ corresponding to each sidelink transmission. This improves spectrum utilization, improves data transmission reliability, and reduces implementation complexity of the terminal device.

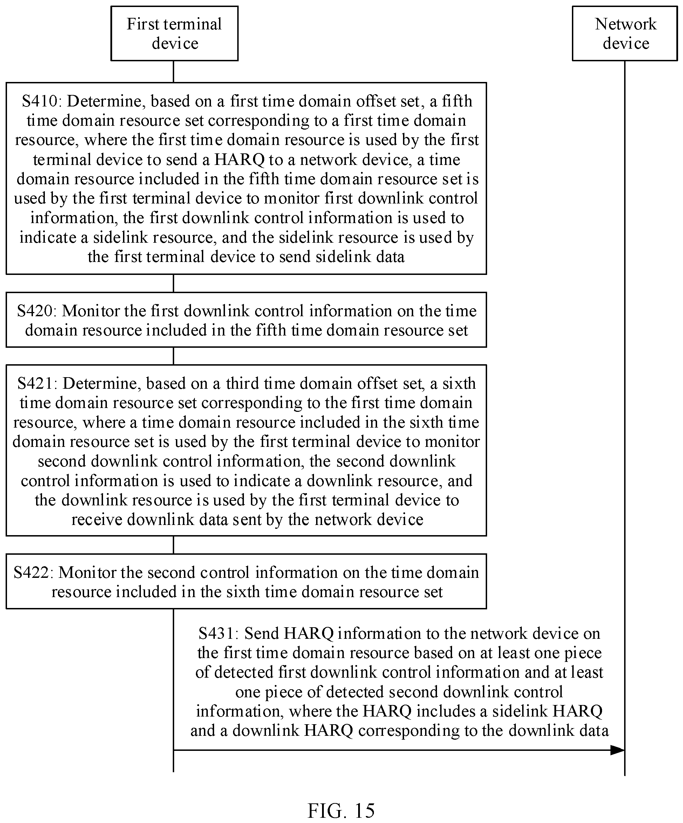

Optionally, in some possible implementations of this application, in S430, the HARQ sent by the first terminal device to the network device on the first time domain resource further includes a downlink HARQ corresponding to downlink data, where the downlink data is data that is received by the first terminal device from the network device. FIG. 15 is a schematic flowchart of a feedback information determining method according to some embodiments of this application. Based on the method steps shown in FIG. 14, the method may further include S421 and S422.

S421: The first terminal device determines, based on a third time domain offset set, a sixth time domain resource set corresponding to the first time domain resource, where a time domain resource included in the sixth time domain resource set is used by the first terminal device to monitor second downlink control information, the second downlink control information is used to indicate a downlink resource, and the downlink resource is used by the first terminal device to receive the downlink data sent by the network device. The third time domain offset set corresponds to a downlink.

S422: The first terminal device monitors the second downlink control information on the time domain resource included in the sixth time domain resource set.

In S430, that the first terminal device sends the HARQ to the network device on the first time domain resource based on the at least one piece of detected first downlink control information includes: S431.

S431: The first terminal device sends the HARQ to the network device on the first time domain resource based on the at least one piece of detected first downlink control information and at least one piece of detected second downlink control information, where the HARQ includes the sidelink HARQ and the downlink HARQ.

For steps S410 and S420 shown in FIG. 15, refer to the foregoing related descriptions of S410 and S420. For brevity, details are not described herein again.

In S421, because the first terminal device may further receive the downlink data sent by the network device, the first terminal device also needs to send, to the network device, the downlink HARQ corresponding to the downlink data. The first time domain resource determined in S410 may be further used by the first terminal device to send the downlink HARQ to the network device. In other words, the HARQ further includes the downlink HARQ and the sidelink HARQ. In this case, the first terminal device further needs to determine the downlink HARQ. Specifically, the downlink data is scheduled by the second downlink control information (for example, a PDCCH or DCI) sent by the network device. Therefore, the first terminal device may determine the downlink data based on the second downlink control information. The first terminal device may determine the sixth time domain resource set based on the third time domain offset set and the first time domain resource, where the time domain resource included in the sixth time domain resource set is used by the first terminal device to monitor the second downlink control information. The second downlink control information is used to indicate a downlink resource, and the downlink resource is used by the first terminal device to receive the downlink data sent by the network device. It should be understood that when the first terminal device monitors the second downlink control information on the time domain resource included in the sixth time domain resource set, a monitoring result may be that one or more pieces of second downlink control information are detected, or the second downlink control information may not be detected. In other words, the network device may send the one or more pieces of second downlink control information to the first terminal device on the time domain resource included in the sixth time domain resource set, or may not send the second downlink control information. A granularity of a time domain resource included in the sixth time domain resource set may be a symbol, a slot, a subframe, a radio frame, or the like. The third time domain offset set corresponds to a downlink. In other words, the third time domain offset set is applicable to determining of a time domain resource related to the downlink.

It should be understood that some time domain resources included in the sixth time domain resource set may overlap some time domain resources included in the fifth time domain resource set. In other words, there may be an intersection set between the sixth time domain resource set and the fifth time domain resource set.

In S422, the first terminal device monitors the second downlink control information on the time domain resource included in the sixth time domain resource set. Optionally, the first terminal device may further monitor the first downlink control information and the second downlink control information in a union set of time domain resources included in the sixth time domain resource set and the fifth time domain resource set.

In S431, the first terminal device monitors at least one piece of first downlink control information and at least one piece of second downlink control information on time domain resources included in a union set of the sixth time domain resource set and the fifth time domain resource set. It should be understood that the first terminal device may traverse the time domain resources included in the union set of the sixth time domain resource set and the fifth time domain resource set, and monitor the first downlink control information and the second downlink control information on each time domain resource. In other words, the first terminal may monitor the first downlink control information on the time domain resources included in the union set of the sixth time domain resource set and the fifth time domain resource set, or may monitor the second downlink control information on the time domain resources included in the union set of the sixth time domain resource set and the fifth time domain resource set.

The first terminal device determines to send the HARQ to the network device on the first time domain resource based on the at least one piece of detected first downlink control information and at least one piece of detected second downlink control information.

For example, the piece of detected first downlink control information may correspond to a one-bit or multi-bit sidelink HARQ. The piece of detected second downlink control information may correspond to a one-bit or multi-bit downlink HARQ. Locations of the sidelink HARQ and the downlink HARQ in the HARQ may be determined based on a sequence of the at least one piece of detected first downlink control information and the at least one piece of detected second downlink control information. According to the feedback information transmission method provided in this application, a time domain resource of the first downlink control information used to schedule the sidelink resource and a time domain resource of the second control information used to schedule the downlink resource are determined based on different time domain offset sets. The sidelink resource is used to transmit the sidelink data, and the downlink resource is used to transmit the downlink data. On a time domain resource on which the first downlink control information and the second downlink control information may be transmitted, the sidelink HARQ corresponding to the sidelink data and the downlink HARQ corresponding to the downlink data are determined based on the detected first downlink control information and second downlink control information, and the sidelink HARQ and the downlink HARQ are jointly used to generate a dynamic HARQ codebook. Compared with a resource conflict that may be caused when a transmission resource is separately used to transmit the sidelink HARQ and the downlink HARQ, this can resolve a problem that the sending device needs to transmit the sidelink HARQ and the downlink HARQ in a same slot, improve spectrum utilization, improve data transmission reliability, and reduce implementation complexity of the terminal device.

It should be understood that the first time domain offset set and the third time domain offset set may be predefined in a protocol or configured by the network device by using signaling.

Optionally, the third time domain offset set may include: a slot offset K1 set (PDSCH-to-HARQ-timing) from a PDSCH to a corresponding ACK/NACK feedback. The first terminal device may determine, based on the K1 set and K0, the sixth time domain resource set corresponding to the first time domain resource. K0 is a slot offset from the PDCCH to the PDSCH.

Optionally, in some possible implementations of this application, both the first downlink control information and the second downlink control information include a C-DAI (Counter-downlink assignment indicator) field and/or a T-DAI (total-downlink assignment indicator) field. In other words, a value of a DAI in the first downlink control information or the second downlink control information indicates an accumulated quantity of PDSCH receptions, SPS PDSCH releases, and sidelink resource indications accumulated in two dimensions: a PDCCH monitoring occasion (PDCCH monitoring occasion) and a serving cell. An accumulation sequence is first an ascending order of indexes of serving cells, and then an ascending order of indexes of PDCCH monitoring occasions. In carrier aggregation, T-DAIs exist in the first downlink control information and the second downlink control information. The T-DAI indicates a total quantity of PDSCH receptions, SPS PDSCH releases, and sidelink resource indications on one monitoring occasion, and a value of a T-DAI is updated only when the monitoring occasion is updated.

Optionally, in some possible implementations of this application, the first downlink control information and the second downlink control information are detected in a serving cell (serving cell) and on a monitoring occasion (monitoring occasion). The monitoring occasion (or may also be referred to as a listening location) may be understood as a time domain position at which the first terminal device monitors the first downlink control information and the second downlink control information. One monitoring occasion may be understood as at least one symbol, one slot, one subframe, one radio frame, or the like. For example, assuming that the union set of the sixth time domain resource set and the fifth time domain resource set includes a plurality of slots, the plurality of slots may be understood as that each slot corresponds to one monitoring occasion. In other words, a plurality of slots correspond to a plurality of monitoring occasions. The first terminal device needs to monitor the first downlink control information and the second downlink control information in each slot. It is assumed that one piece of first downlink control information and one piece of second downlink control information are detected on a monitoring occasion and in a serving cell. Because both sidelink HARQs and downlink HARQs that correspond to the two pieces of downlink control information are fed back on the first time domain resource, relative locations of the sidelink HARQs and the downlink HARQs need to be determined. In this case, a sidelink HARQ for sidelink data corresponding to the detected first downlink control information may be located before a downlink HARQ for downlink data corresponding to the detected second downlink control information, or a sidelink HARQ for sidelink data corresponding to the detected first downlink control information may be located after a downlink HARQ for downlink data corresponding to the detected second downlink control information.

It should be understood that, if a plurality of pieces of first downlink control information and a plurality of pieces of second downlink control information are detected on a monitoring occasion and in a serving cell, A plurality of sidelink HARQs corresponding to the plurality of pieces of detected first downlink control information may be located before a plurality of downlink HARQs corresponding to the plurality of pieces of detected second downlink control information, or a plurality of HARQs corresponding to the plurality of pieces of detected first downlink control information may be located after a plurality of downlink HARQs corresponding to the plurality of pieces of detected second downlink control information.

According to the feedback information transmission method provided in this application, the first downlink control information used to indicate the sidelink resource and the second downlink control information used to schedule the downlink data are detected on the PDCCH monitoring occasion and in the serving cell, so that a relative location (a sequence) of the sidelink HARQ corresponding to the first downlink control information and the downlink HARQ corresponding to the second downlink control information is determined, thereby improving accuracy of HARQ feedback, ensuring normal operation of a HARQ mechanism, reducing implementation complexity of the terminal device, and reducing a probability of a conflict between a plurality of resources used to transmit the HARQ.

Optionally, in some other possible implementations of this application, the first downlink control information and the second downlink control information are detected in a serving cell and on a monitoring occasion. Both the first downlink control information and the second downlink control information are monitored on a control resource set (control resource set, CORESET) corresponding to a control channel. The control resource set may be understood as follows: Some specific time-frequency resources are used to carry a control channel (downlink control information) on a time-frequency resource in a system, and these specific time-frequency resources are notified to the terminal device in advance by using higher layer signaling, so that the terminal device can monitor the control channel on the specific time-frequency resources at a subsequent specific monitoring moment. The control resource set includes information about a time-frequency resource occupied for sending a control channel (for example, a PDCCH) by the network device. A minimum resource element of the control resource set may be a control channel element (control channel element, CCE). This may be understood as that the control resource set includes CCEs.

In a serving cell and on a monitoring occasion, if an index (index) of a CCE corresponding to the detected first downlink control information is less than an index of a first CCE corresponding to the detected second downlink control information, it may be considered that a moment at which the first downlink control information is detected is earlier than a moment at which the second downlink control information is detected, or it may be considered that sidelink data corresponding to the first downlink control information is earlier than downlink data corresponding to the second downlink control information. In this case, the sidelink HARQ for the sidelink data corresponding to the detected first downlink control information may be located before the downlink HARQ for the downlink data corresponding to the detected second downlink control information.

In a serving cell and on a monitoring occasion, if an index (index) of a CCE corresponding to the detected first downlink control information is greater than an index of a first CCE corresponding to the detected second downlink control information, it may be considered that a moment at which the first downlink control information is detected is later than a moment at which the second downlink control information is detected, or it may be considered that sidelink data corresponding to the first downlink control information is later than downlink data corresponding to the second downlink control information. In this case, the sidelink HARQ for the sidelink data corresponding to the detected first downlink control information may be located after the downlink HARQ for the downlink data corresponding to the detected second downlink control information.

It should be further understood that, if a plurality of pieces of first downlink control information and a plurality of pieces of second downlink control information are detected in a serving cell and on a monitoring occasion, relative locations (sequences) of sidelink HARQs and downlink HARQs that respectively correspond to the plurality of pieces of first downlink control information and the plurality of pieces of second downlink control information may be determined based on sizes of first CCE indexes respectively corresponding to the plurality of pieces of detected first downlink control information and the plurality of pieces of detected second downlink control information.

Optionally, in a serving cell and on a monitoring occasion, if an index (index) of a CCE corresponding to the detected first downlink control information is less than an index of a first CCE corresponding to the detected second downlink control information, a value of a counter downlink assignment indicator (counter downlink assignment Indicator, C-DAI) corresponding to the detected first downlink control information is less than a value of a C-DAI corresponding to the detected second downlink control information. In this case, the sidelink HARQ for the sidelink data corresponding to the detected first downlink control information may be located before the downlink HARQ for the downlink data corresponding to the detected second downlink control information.

Optionally, in a serving cell and on a monitoring occasion, if an index (index) of a CCE corresponding to the detected first downlink control information is greater than an index of a first CCE corresponding to the detected second downlink control information, a value of a counter downlink assignment indicator C-DAI corresponding to the detected first downlink control information is greater than a value of a C-DAI corresponding to the detected second downlink control information.

Optionally, on one PDSCH reception, one SPS PDSCH release, and one sidelink resource indication, values of total-downlink assignment indicator (total-DAI) corresponding to the detected first downlink control information and second downlink control information are the same.

Optionally, in this embodiment of this application, if a CBG-based HARQ feedback is configured for a serving cell in which the first downlink control information is located, a HARQ corresponding to the first downlink control information is generated based on a TB.

Optionally, in this embodiment of this application, assuming that the CBG-based feedback is configured for sidelink transmission, a quantity of bits fed back by one TB is equal to a larger value between a quantity of CBGs that can be configured for one TB in downlink transmission and a quantity of CBGs that can be configured for one TB in sidelink transmission. A CBG-based HARQ codebook for sidelink transmission and a CBG-based HARQ codebook for downlink transmission may be separately generated and concatenated together. In this case, a DAI mechanism needs to be used for counting separately. Correspondingly, the CBG-based HARQ codebook for sidelink transmission may be located before the CBG-based HARQ codebook for downlink transmission, or the CBG-based HARQ codebook for sidelink transmission may be located after the CBG-based HARQ codebook for downlink transmission. The CBG-based HARQ codebook for sidelink transmission and the CBG-based HARQ codebook for downlink transmission may be generated together. In this case, a same DAI mechanism needs to be used for counting.

Optionally, in this embodiment of this application, when the first control information and the second control information are detected in a serving cell with a largest index and on a PDCCH monitoring occasion with a largest index, the first control information is the last DCI or the second control information is the last DCI. The first terminal device may determine the first time domain resource based on an indication of the last DCI.

Optionally, in some possible implementations of this application, the first time domain offset set is a set of time domain offsets between the first time domain resource and a time domain resource occupied by the sidelink data, and the first terminal device may determine, based on the time domain offsets included in the first time domain offset set and the first time domain resource, time domain resources (for example, which may be the second time domain resource set in the method 300) occupied by a plurality of pieces of sidelink data. Then, the fifth time domain resource set is determined based on the first parameter and the time domain resources occupied by the plurality of pieces of sidelink data. The fifth time domain resource set may be understood as a set of time domain resources of SL PDCCHs in FIG. 8, FIG. 10, and FIG. 12.

The first time domain offset set may be referred to as a {PSSCH-to-PUCCH timing} set. A PUCCH may be understood as the first time domain resource, and a PSSCH may be understood as the sidelink data or the time domain resource occupied by the sidelink data. The time domain offsets may include a subslot offset, a slot offset, a subframe offset, a radio frame offset, and the like. The first time domain offset set may be equivalent to the first time domain offset set shown in FIG. 8.

For a process in which the first terminal device determines, based on the time domain offsets included in the first time domain offset set and the first time domain resource, the time domain resources occupied by the plurality of sidelink data, refer to the foregoing descriptions in S311. The time domain resources occupied by the plurality of pieces of sidelink data may be understood as the second time domain resource set determined in S311.

After determining the time domain resources (the second time domain resource set) occupied by the plurality of pieces of sidelink data, the first terminal device determines the fifth time domain resource set based on the time domain resources (the second time domain resource set) occupied by the plurality of pieces of sidelink data and the second parameter. The second parameter is a time domain offset (offset) between a time domain resource of the sidelink data and a time domain resource occupied by downlink control information. The offset may be understood as a time domain offset between the second time domain resource set and an SL PDCCH time domain resource in FIG. 8, FIG. 10, and FIG. 12. The SL PDCCH time domain resource in FIG. 8, FIG. 10, and FIG. 12 may be understood as a time domain resource included in the fifth time domain resource set. For example, assuming that the offset is 3, and the time domain resources (the second time domain resource set) occupied by the plurality of pieces of sidelink data include the slot n-5, the slot n-4, and the slot n-3, the determined fifth time domain resource set includes the slot n-8, the slot n-7, and the slot n-6.

Optionally, in some possible implementations of this application, the first time domain offset set is a set of time domain offsets between the first time domain resource and a time domain resource of the sidelink HARQ. The first time domain offset set may be referred to as a {PSFCH-to-PUCCH timing} set. A PUCCH may be understood as the first time domain resource, and a PSFCH may be understood as a resource occupied by the sidelink HARQ. The time domain resource of the sidelink HARQ is a time domain resource on which the first terminal device receives a sidelink HARQ sent by another terminal device.

The first terminal device determines the fifth time domain resource set based on a third parameter and the time domain offsets included in the first time domain offset set. The third parameter includes the time domain offset (offset) between the time domain resource of the sidelink data and the time domain resource occupied by the downlink control information, a resource feedback periodicity N, and a time domain offset K between the time domain resource of the sidelink data and the time domain resource of the sidelink HARQ.

Specifically, the first terminal device may determine, based on the time domain offsets included in the first time domain offset set and the first time domain resource, with reference to the resource feedback periodicity N and the time domain offset K between the time domain resource of the sidelink data and the time domain resource of the sidelink HARQ, time domain resources (for example, which may be the second time domain resource set in the method 300) occupied by the plurality of pieces of sidelink data. The first time domain offset set may be equivalent to the first time domain offset set shown in FIG. 10. For a process of determining, based on the time domain offsets included in the first time domain offset set, the resource feedback periodicity N, and the time domain offset K between the time domain resource of the sidelink data and the time domain resource of the sidelink HARQ, the time domain resources occupied by the plurality of pieces of sidelink data, refer to the foregoing related descriptions in S312 and S313. For brevity, details are not described herein again. The time domain resources occupied by the plurality of pieces of sidelink data may be understood as the second time domain resource set determined in S313.

After determining the time domain resources occupied by the plurality of pieces of sidelink data, the first terminal device determines the fifth time domain resource set based on the time domain resources occupied by the plurality of pieces of sidelink data and the time domain offset (offset) between the time domain resources of the sidelink data and the time domain resources occupied by the downlink control information. A specific process is similar to the foregoing process of determining the fifth time domain resource set based on the second time domain resource set and the offset (offset). For related descriptions, refer to the foregoing process of determining the fifth time domain resource set based on the second time domain resource set and the offset (offset). For brevity, details are not described herein again.

Optionally, in some possible implementations of this application, when the first time domain offset set is a set of time domain offsets between the first time domain resource and the time domain resources occupied by the downlink control information for scheduling the sidelink resource, the first time domain offset set may be referred to as a {PDCCH-to-PUCCH timing} set. The first time domain offset set may be equivalent to the first time domain offset set shown in FIG. 12. A PUCCH may be understood as the first time domain resource, and a PDCCH may be understood as downlink control information for scheduling the sidelink resource. For a specific process in which the first terminal device determines the fifth time domain resource set based on the time domain offsets included in the first time domain offset set and the first time domain resource, refer to related descriptions in S314 in the method 300. For brevity, details are not described herein again.

For example, it is assumed that the first time domain offset set is {6, 7, 8}. If the first time domain resource is a slot n, it may be determined that the time domain resources occupied by the downlink control information for scheduling the sidelink resource include a slot n-8, a slot n-7, and a slot n-6. In other words, the fifth time domain resource set includes the slot n-8, the slot n-7, and the slot n-6.

It should be understood that, in this embodiment of this application, "predefined" may be understood as "defined in a protocol". Signaling configuration may be understood as configuration performed by using higher layer signaling or physical layer signaling. The higher layer signaling may include, for example, radio resource control (radio resource control, RRC) signaling, medium access control (medium access control, MAC) control element (control element, CE) signaling, and radio link control (radio link control, RLC) signaling. The physical layer signaling may include, for example, DCI and SCI.

It should be understood that in the embodiments of this application, "first", "second", and the like are merely for ease of description. For example, the first time domain resource and the second time domain resource are merely used to indicate different time domain resources. However, there should be no impact on the time domain resources and a quantity of time domain resources. The foregoing first, second, and the like should not impose any limitation on this embodiment of this application.

It should be further understood that the foregoing descriptions are merely intended to help a person skilled in the art better understand the embodiments of this application, but are not intended to limit the scope of the embodiments of this application. It is apparent that a person skilled in the art may make various equivalent modifications or changes according to the examples provided above. For example, some steps in the embodiments in the method 200 to the method 400 may be unnecessary, some steps may be newly added, or the like. Alternatively, any two or more of the foregoing embodiments may be combined. Such a modified, changed, or combined solution also falls within the scope of the embodiments of this application.

It should be further understood that, the foregoing descriptions of the embodiments of this application focus on a difference between the embodiments. For same or similar parts that are not mentioned, refer to each other. For brevity, details are not described herein.

It should be further understood that sequence numbers of the foregoing processes do not mean execution sequences. The execution sequences of the processes should be determined based on functions and internal logic of the processes, and should not constitute any limitation on implementation processes of the embodiments of this application.

It should be further understood that in the embodiments of this application, "preset" and "predefined" may be implemented in a manner in which corresponding code, a table, or other related indication information is prestored in a device (for example, including a terminal and a network device). A specific implementation of the foregoing "preset" and "predefined" is not limited in this application.

It should be understood that division of manners, cases, types, and embodiments in the embodiments of this application are merely for ease of description, but should not constitute any special limitation, and features in various manners, types, cases, and embodiments may be combined when there is no contradiction.

It should be further understood that in the embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

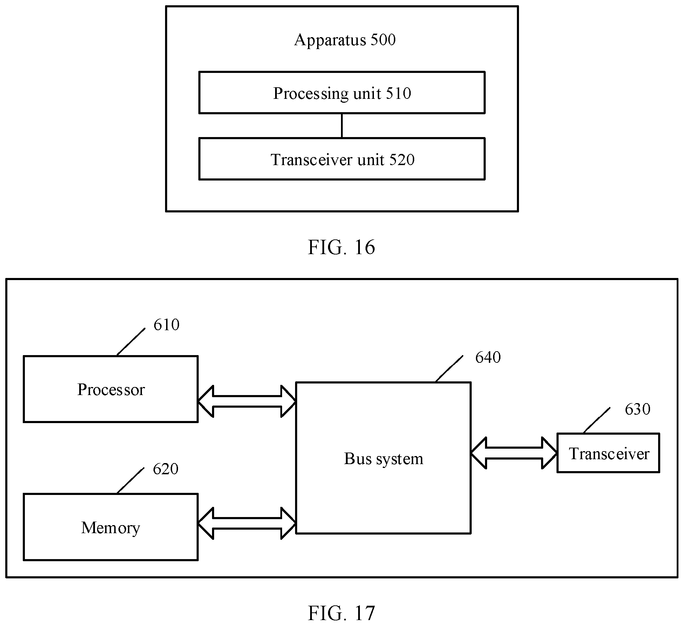

The feedback transmission method in the embodiments of this application is described in detail above with reference to FIG. 1 to FIG. 15. The following describes in detail a feedback information transmission apparatus in the embodiments of this application with reference to FIG. 16 to FIG. 24.

FIG. 16 is a schematic block diagram of a feedback information transmission apparatus 500 according to an embodiment of this application. The apparatus 500 may correspond to the first terminal device described in the method 200, or may be a chip or a component used in the first terminal device, and modules or units in the apparatus 500 are respectively configured to perform actions or processing processes performed by the first terminal device in the method 200.

As shown in FIG. 16, the apparatus 500 includes a processing unit 510 and a transceiver unit 520. The transceiver unit 520 is configured to perform specific signal receiving and sending under driving of the processing unit 510.

The processing unit 510 is configured to obtain a first resource used to transmit a sidelink HARQ and a second resource used to transmit a downlink HARQ, where the sidelink HARQ is a HARQ corresponding to sidelink data sent by a first terminal device, and the downlink HARQ is a HARQ corresponding to downlink data that is received by the first terminal device from a network device.

The transceiver unit 520 is configured to: when the first resource and the second resource overlap in time domain, send feedback information to the network device on a third resource based on a priority of the sidelink HARQ and a first threshold, where the feedback information includes the sidelink HARQ and/or the downlink HARQ, and the third resource is determined based on the first resource and the second resource.

According to the feedback information transmission apparatus provided in this application, when the resource for transmitting the sidelink HARQ and the resource for transmitting the downlink HARQ overlap in time domain, the threshold is compared with the priority of the sidelink HARQ, and the threshold is used to represent a priority of a downlink service type. Different downlink service types may correspond to different thresholds. The feedback information transmitted on the third resource is determined based on a comparison result. The feedback information of the third resource may be a combination of or one of the sidelink HARQ and the downlink HARQ. This can ensure normal operation of a HARQ feedback mechanism and improve data transmission reliability.

Optionally, in some embodiments of this application, the priority of the sidelink HARQ is:
the priority of the sidelink HARQ is a priority of the first resource, or the priority of the sidelink HARQ is a priority of the sidelink data corresponding to the sidelink HARQ, or the priority of the sidelink HARQ is a priority of a PSSCH corresponding to the sidelink HARQ; or the priority of the sidelink HARQ is a value of a priority field in SCI for scheduling the sidelink data, or the priority of the sidelink HARQ is a priority of a channel for transmitting the sidelink HARQ, or the priority of the sidelink HARQ is a priority of sidelink transmission corresponding to the sidelink HARQ.

Optionally, in some embodiments of this application, when there are a plurality of pieces of data corresponding to the sidelink HARQ, the priority of the sidelink HARQ is a priority of data with a highest priority in the plurality of pieces of data.

Optionally, in some embodiments of this application, the processing unit 510 is further configured to determine the first threshold from at least one threshold based on a service type of the downlink data, where the at least one threshold corresponds to different service types.

Optionally, in some embodiments of this application, when the priority of the sidelink HARQ is less than or equal to the first threshold, the transceiver unit 520 is further configured to send only the downlink HARQ to the network device on the third resource; or
when the priority of the sidelink HARQ is greater than the first threshold, the transceiver unit 520 is further configured to send only the sidelink HARQ to the network device on the third resource.

Optionally, in some embodiments of this application,
when the priority of the sidelink HARQ is greater than the first threshold, the transceiver unit 520 is further configured to send the sidelink HARQ and the downlink HARQ to the network device on the third resource; or
when the priority of the sidelink HARQ is less than or equal to the first threshold, the transceiver unit 520 is further configured to send only the downlink HARQ to the network device on the third resource.

Further, the apparatus 500 may further include a storage unit, and the transceiver unit 520 may be a transceiver, an input/output interface, or an interface circuit. The storage unit is configured to store instructions executed by the transceiver unit 520 and the processing unit 510. The transceiver unit 520, the processing unit 510, and the storage unit are coupled to each other. The storage unit stores instructions, the processing unit 510 is configured to execute the instructions stored in the storage unit, and the transceiver unit 520 is configured to perform specific signal receiving and sending under driving of the processing unit 510.

It should be understood that for a specific process in which the units in the apparatus 500 perform the foregoing corresponding steps, refer to the foregoing descriptions related to the second terminal device with reference to the method 200 and the related embodiment in FIG. 3. For brevity, details are not described herein again.

Optionally, the transceiver unit 520 may include a receiving unit (module) and a sending unit (module), configured to perform the steps of receiving information and sending information by the first terminal device in the embodiments of the method 200 and the embodiments shown in FIG. 3 and FIG. 4.

It should be understood that the transceiver unit 520 may be a transceiver, an input/output interface, or an interface circuit. The storage unit may be a memory. The processing unit 510 may be implemented by a processor. As shown in FIG. 17, a feedback information transmission apparatus 600 may include a processor 610, a memory 620, a transceiver 630, and a bus system 640. All components of the apparatus 600 are coupled together through a bus system 640. In addition to a data bus, the bus system 640 includes a power bus, a control bus, a status signal bus, and the like. However, for clarity of description, various buses are marked as the bus system 640 in FIG. 17. For ease of representation, only illustrative depiction is provided in FIG. 17.

The feedback information transmission apparatus 500 shown in FIG. 16 or the feedback information transmission apparatus 600 shown in FIG. 17 can implement steps performed by the first terminal device in the embodiments of the method 200 and the embodiments shown in FIG. 3 and FIG. 4. For similar descriptions, refer to the descriptions in the foregoing corresponding method. To avoid repetition, details are not described herein again.

It should be further understood that the feedback information transmission apparatus 500 shown in FIG. 16 or the feedback information transmission apparatus 600 shown in FIG. 17 may be a terminal device.

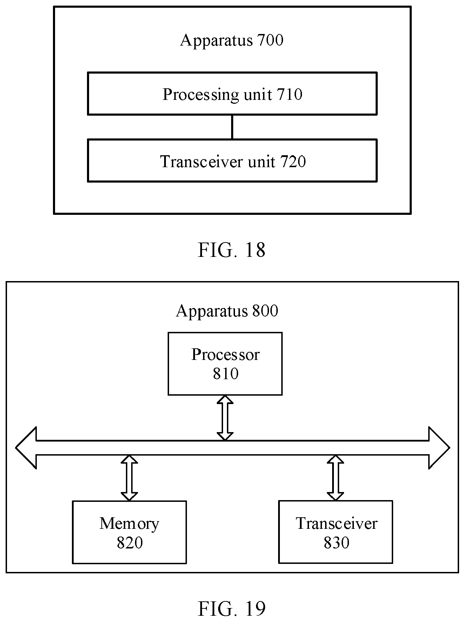

FIG. 18 is a schematic block diagram of a feedback information transmission apparatus 700 according to an embodiment of this application. The apparatus 700 may correspond to the network device described in the method 200, or may be a chip or a component used in the network device, and modules or units in the apparatus 700 are respectively configured to perform actions or processing processes performed by the network device in the method 200.

As shown in FIG. 18, the apparatus 700 includes a processing unit 710 and a transceiver unit 720. The transceiver unit 720 is configured to perform specific signal receiving and sending under driving of the processing unit 710.

The processing unit 710 is configured to determine a first resource used to transmit a sidelink HARQ and a second resource used to transmit a downlink HARQ, where the sidelink HARQ is a HARQ corresponding to sidelink data sent by a first terminal device, and the downlink HARQ is a HARQ corresponding to downlink data sent by a network device to the first terminal device.

The transceiver unit 720 is configured to: when the first resource and the second resource overlap in time domain, receive feedback information from the first terminal device on a third resource, where the feedback information includes the sidelink HARQ and/or the downlink HARQ, the feedback information is determined based on a priority of the sidelink HARQ and a first threshold, and the third resource is determined based on the first resource and the second resource.

According to the feedback information transmission apparatus provided in this application, when the resource for transmitting the sidelink HARQ and the resource for transmitting the downlink HARQ overlap in time domain, the threshold is compared with the priority of the sidelink HARQ, and the threshold is used to represent a priority of a downlink service type. Different downlink service types may correspond to different thresholds. The feedback information received on the third resource is determined based on a comparison result. The feedback information of the third resource may be a combination of or one of the sidelink HARQ and the downlink HARQ. This can ensure normal operation of a HARQ feedback mechanism and improve data transmission reliability.

Optionally, in some embodiments of this application, the priority of the sidelink HARQ is a priority of the first resource, or the priority of the sidelink HARQ is a priority of the sidelink data corresponding to the sidelink HARQ, or the priority of the sidelink HARQ is a priority of a PSSCH corresponding to the sidelink HARQ; or the priority of the sidelink HARQ is a value of a priority field in SCI for scheduling the sidelink data, or the priority of the sidelink HARQ is a priority of a channel for transmitting the sidelink HARQ, or the priority of the sidelink HARQ is a priority of sidelink transmission corresponding to the sidelink HARQ.

Optionally, in some embodiments of this application, when there are a plurality of pieces of data corresponding to the sidelink HARQ, the priority of the sidelink HARQ is a priority of data with a highest priority in the plurality of pieces of data.

Optionally, in some embodiments of this application, the first threshold is determined from at least one threshold based on a service type of the downlink data, and the at least one threshold corresponds to different service types.

Optionally, in some embodiments of this application, when the priority of the sidelink HARQ is less than or equal to the first threshold, the feedback information includes only the downlink HARQ; or
when the priority of the sidelink HARQ is greater than the first threshold, the feedback information includes only the sidelink HARQ.

Optionally, in some embodiments of this application, when the priority of the sidelink HARQ is greater than the first threshold, the feedback information includes the sidelink HARQ and the downlink HARQ; or
when the priority of the sidelink HARQ is less than or equal to the first threshold, the feedback information includes only the sidelink HARQ.

It should be understood that for a specific process in which the units in the apparatus 700 perform the foregoing corresponding steps, refer to the foregoing descriptions related to the network device with reference to the method 200 and the related embodiments in FIG. 3 and FIG. 4. For brevity, details are not described herein again.

Optionally, the transceiver unit 720 may include a receiving unit (module) and a sending unit (module), configured to perform the steps of receiving information and sending information by the network device in the embodiments of the method 200 and the embodiments shown in FIG. 3 and FIG. 4.

Further, the apparatus 700 may further include a storage unit, and the transceiver unit 720 may be a transceiver, an input/output interface, or an interface circuit. The storage unit is configured to store instructions executed by the transceiver unit 720 and the processing unit 710. The transceiver unit 720, the processing unit 710, and the storage unit are coupled to each other. The storage unit stores instructions, the processing unit 710 is configured to execute the instructions stored in the storage unit, and the transceiver unit 720 is configured to perform specific signal receiving and sending under driving of the processing unit 710.

It should be understood that the transceiver unit 720 may be a transceiver, an input/output interface, or an interface circuit. The storage unit may be a memory. The processing unit 710 may be implemented by a processor. As shown in FIG. 19, a feedback information transmission apparatus 800 may include a processor 810, a memory 820, and a transceiver 830.

The feedback information transmission apparatus 700 shown in FIG. 18 or the feedback information transmission apparatus 800 shown in FIG. 19 can implement steps performed by the network device in the embodiments of the method 200 and the embodiments shown in FIG. 3 and FIG. 4. For similar descriptions, refer to the descriptions in the foregoing corresponding method. To avoid repetition, details are not described herein again.

It should be further understood that the feedback information transmission apparatus 700 shown in FIG. 18 or the feedback information transmission apparatus 800 shown in FIG. 19 may be a network device.

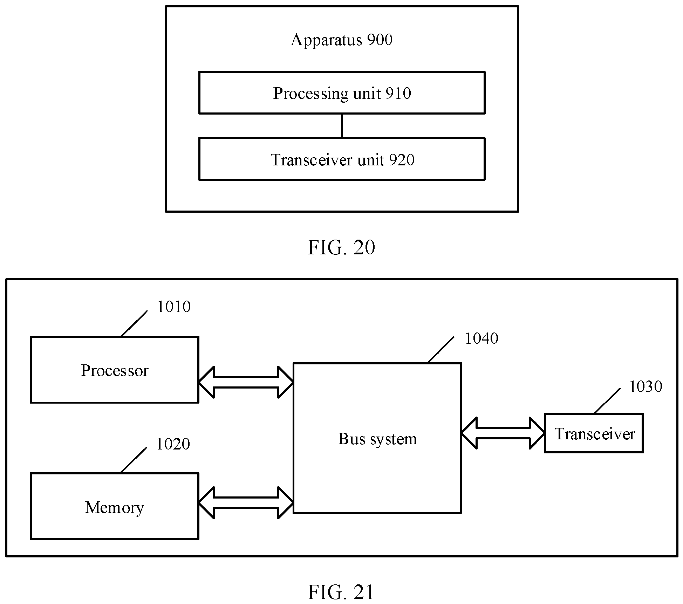

FIG. 20 is a schematic block diagram of a feedback information transmission apparatus 900 according to an embodiment of this application. The apparatus 900 may correspond to the first terminal device described in the method 300 and the method 400, or may be a chip or a component used in the first terminal device, and modules or units in the apparatus 900 are respectively configured to perform actions or processing processes performed by the first terminal device in the method 300 and the method 400.

As shown in FIG. 20, the apparatus 900 includes a processing unit 910 and a transceiver unit 920. The transceiver unit 920 is configured to perform specific signal receiving and sending under driving of the processing unit 910.

In some possible implementations,
the processing unit 910 is configured to determine, based on a first time domain offset set, a second time domain resource set corresponding to a first time domain resource, where the first time domain resource is a time domain resource that can be used by a first terminal device to send a hybrid automatic repeat request HARQ to a network device, and the HARQ includes a sidelink HARQ corresponding to sidelink data sent by the first terminal device;
the processing unit 910 is further configured to determine a third time domain resource set from the second time domain resource set, where a time domain resource in the third time domain resource set is a candidate time domain resource used to send the sidelink data; and
the processing unit 910 is further configured to determine the HARQ based on the third time domain resource set.

According to the feedback information transmission apparatus provided in this application, all time domain resources that may be used to send the sidelink data are determined based on the first time domain offset set and an uplink time domain resource that may be used to send the sidelink HARQ, corresponding HARQ bit positions are reserved for all the sidelink data that may be sent, and all possible sidelink HARQs are jointly used to generate a semi-static HARQ codebook, to ensure that all the possible sidelink HARQs can be normally fed back. This can resolve a problem of a resource conflict when one sending device needs to send a plurality of sidelink HARQs on a plurality of resources, improve spectrum utilization, and improve data transmission reliability. In addition, bits are semi-statically reserved for each possible sidelink transmission, to ensure that the network device and the first terminal device have a consistent understanding of the sidelink HARQ, and no confusion occurs.

Optionally, in some embodiments of this application, the first time domain offset set is a set of time domain offsets between the first time domain resource and a time domain resource occupied by the sidelink data; and the processing unit 910 is further configured to determine the second time domain resource set based on the time domain offsets included in the first time domain offset set and the first time domain resource.

Optionally, in some embodiments of this application, the first time domain offset set is a set of time domain offsets between the first time domain resource and a time domain resource of the sidelink HARQ, and the time domain resource of the sidelink HARQ is a time domain resource on which the first terminal device receives the sidelink HARQ; and
the processing unit 910 is further configured to: determine, based on the time domain offsets included in the first time domain offset set and the first time domain resource, time domain resources of a plurality of sidelink HARQs; and determine the second time domain resource set from the time domain resources of the plurality of sidelink HARQs based on a first parameter, where the first parameter includes a resource feedback periodicity and a time domain offset between the time domain resource of the sidelink data and the time domain resource of the sidelink HARQ.

Optionally, in some embodiments of this application, the first time domain offset set is a set of time domain offsets between the first time domain resource and a time domain resource occupied by downlink control information for scheduling a sidelink resource, the sidelink resource is used by the first terminal device to send the sidelink data, and
the processing unit 910 is further configured to: determine, based on the time domain offsets included in the first time domain offset set and the first time domain resource, time domain resources occupied by a plurality of pieces of downlink control information for scheduling the sidelink resource; and determine, based on a second parameter, the second time domain resource set from the time domain resources occupied by the plurality of pieces of control information, where the second parameter is a time domain offset between a time domain resource of the sidelink data and the time domain resource occupied by the downlink control information.

Optionally, in some embodiments of this application, the processing unit 910 is further configured to determine the third time domain resource set from the second time domain resource set based on a frame structure configuration of a time domain resource included in the second time domain resource set.

Optionally, in some embodiments of this application, the HARQ further includes a downlink HARQ corresponding to downlink data, and the downlink data is data that is received by the first terminal device from the network device; and
the processing unit 910 is further configured to: determine, based on a second time domain offset set, a fourth time domain resource set corresponding to the first time domain resource, where the fourth time domain resource set includes a plurality of candidate time domain resources used to transmit the downlink data, and the downlink data is the data that is received by the first terminal device from the network device; and determine the HARQ based on the third time domain resource set and the fourth time domain resource set.

Optionally, in some embodiments of this application, the processing unit 910 is further configured to determine the HARQ based on a frame structure configuration of a time domain resource included in the third time domain resource set and a frame structure configuration of a time domain resource included in the fourth time domain resource set.

Optionally, in some embodiments of this application, the transceiver unit 920 is configured to send the HARQ to the network device on the first time domain resource.

In some other possible implementations,
the processing unit 910 is configured to determine, based on a first time domain offset set, a fifth time domain resource set corresponding to a first time domain resource, where the first time domain resource is used by the first terminal device to send a hybrid automatic repeat request HARQ to a network device, and the first time domain offset set corresponds to a sidelink;
the processing unit 910 is further configured to monitor first downlink control information on a time domain resource included in the fifth time domain resource set, where the first downlink control information is used to indicate a sidelink resource, and the sidelink resource is used by the first terminal device to send sidelink data; and
the transceiver unit 920 is configured to send a HARQ to the network device on the first time domain resource based on at least one piece of detected first downlink control information, where the HARQ includes a sidelink HARQ for sidelink data corresponding to the at least one piece of first downlink control information.

According to the feedback information transmission apparatus provided in this application, based on the first time domain resource used to send the sidelink HARQ and the fifth time domain offset set, the time domain resource included in the fifth time domain resource set is used by the first terminal device to monitor the first downlink control information, the first downlink control information is used to indicate the sidelink resource, and the sidelink resource is used by the first terminal device to send the sidelink data. The sidelink HARQ corresponding to the sidelink data is determined based on the at least one piece of first downlink control information detected on the time domain resource included in the fifth time domain resource set, and all the sidelink HARQs are jointly used to generate a dynamic HARQ codebook, to resolve a problem that a transmission resource conflict occurs because a sending device needs to separately transmit a HARQ corresponding to each sidelink transmission. This improves spectrum utilization, improves data transmission reliability, and reduces implementation complexity of the terminal device.

Optionally, in some embodiments of this application, the HARQ further includes a downlink HARQ corresponding to downlink data, and the downlink data is data that is received by the first terminal device from the network device; and
the processing unit 910 is further configured to determine, based on a third time domain offset set, a sixth time domain resource set corresponding to the first time domain resource, where the sixth time domain resource set includes a plurality of time domain resources used to transmit downlink control information, and the third time domain offset set corresponds to a downlink; and monitor second downlink control information on a time domain resource included in the sixth time domain resource set, where the second downlink control information is used to indicate a downlink resource, and the downlink resource is used by the first terminal device to receive the downlink data; and
the transceiver unit 920 is configured to send the HARQ to the network device on the first time domain resource based on the at least one piece of detected first downlink control information and at least one piece of detected second downlink control information.

Optionally, in some embodiments of this application, when the processing unit 910 monitors the first downlink control information and the second downlink control information in a serving cell and on a monitoring occasion,
the sidelink HARQ for the sidelink data corresponding to the detected first downlink control information is located before the downlink HARQ for the downlink data corresponding to the detected second downlink control information, or the sidelink HARQ for the sidelink data corresponding to the detected first downlink control information is located after the downlink HARQ for the downlink data corresponding to the detected second downlink control information.

Optionally, in some embodiments of this application, when the processing unit 910 monitors the first downlink control information and the second downlink control information in a serving cell and on a monitoring occasion,
when an index of a first control channel element CCE corresponding to the detected first downlink control information is less than an index of a first CCE corresponding to the detected second downlink control information, the sidelink HARQ for the sidelink data corresponding to the detected first downlink control information is located before the downlink HARQ for the downlink data corresponding to the detected second downlink control information; or
when an index of a first control channel element CCE corresponding to the detected first downlink control information is greater than an index of a first CCE corresponding to the detected second downlink control information, the sidelink HARQ for the sidelink data corresponding to the detected first downlink control information is located after the HARQ for the downlink data corresponding to the detected second downlink control information.

Optionally, in some embodiments of this application, a value of a counter downlink assignment indicator C-DAI corresponding to the detected first downlink control information is less than a value of a C-DAI corresponding to the detected second downlink control information, or
a value of a counter downlink assignment indicator C-DAI corresponding to the detected first downlink control information is greater than a value of a C-DAI corresponding to the detected second downlink control information.

Optionally, in some embodiments of this application, the first time domain offset set is a set of time domain offsets between the first time domain resource and a time domain resource occupied by the sidelink data; and
the processing unit 910 is further configured to: determine, based on the time domain offsets included in the first time domain offset set and the first time domain resource, time domain resources occupied by a plurality of pieces of sidelink data; and determine the fifth time domain resource set based on a second parameter and the time domain resources occupied by the plurality of pieces of sidelink data, where the second parameter is a time domain offset between the time domain resources of the sidelink data and a time domain resource occupied by downlink control information.

Optionally, in some embodiments of this application, the first time domain offset set is a set of time domain offsets between the first time domain resource and a time domain resource of the sidelink HARQ, and the time domain resource of the sidelink HARQ is a time domain resource on which the first terminal device receives the sidelink HARQ; and
the processing unit 910 is further configured to determine the fifth time domain resource set based on a third parameter and the time domain offsets included in the first time domain offset set, where the third parameter includes a time domain offset between a time domain resource of the sidelink data and a time domain resource occupied by downlink control information, a resource feedback periodicity, and a time domain offset between the time domain resource of the sidelink data and the time domain resource of the sidelink HARQ.

Optionally, in some embodiments of this application, the first time domain offset set is a set of time domain offsets between the first time domain resource and a time domain resource occupied by downlink control information; and
the processing unit 910 is further configured to determine the fifth time domain resource set based on the time domain offsets included in the first time domain offset set and the first time domain resource.

Further, the apparatus 900 may further include a storage unit, and the transceiver unit 920 may be a transceiver, an input/output interface, or an interface circuit. The storage unit is configured to store instructions executed by the transceiver unit 920 and the processing unit 910. The transceiver unit 920, the processing unit 910, and the storage unit are coupled to each other. The storage unit stores instructions, the processing unit 910 is configured to execute the instructions stored in the storage unit, and the transceiver unit 920 is configured to perform specific signal receiving and sending under driving of the processing unit 910.

It should be understood that, for a specific process in which the units in the apparatus 900 perform the foregoing corresponding steps, refer to the foregoing descriptions related to the first terminal device with reference to the method 300, the method 400, and the related embodiments in FIG. 5 to FIG. 7, FIG. 9, FIG. 11, and FIG. 13 to FIG. 15. For brevity, details are not described herein.

Optionally, the transceiver unit 920 may include a receiving unit (module) and a sending unit (module), configured to perform the steps of receiving information and sending information by the first terminal device in the method 300, the method 400 and the embodiments shown in FIG. 5 to FIG. 7, FIG. 9, FIG. 11, and FIG. 13 to FIG. 15.

It should be understood that the transceiver unit 920 may be a transceiver, an input/output interface, or an interface circuit. The storage unit may be a memory. The processing unit 910 may be implemented by a processor. As shown in FIG. 21, a feedback information transmission apparatus 1000 may include a processor 1010, a memory 1020, a transceiver 1030, and a bus system 1040. All components of the feedback information transmission apparatus 1000 are coupled together through a bus system 1040. In addition to a data bus, the bus system 1040 includes a power bus, a control bus, a status signal bus, and the like. However, for clarity of description, various buses are marked as the bus system 1040 in FIG. 21. For ease of representation, only illustrative depiction is provided in FIG. 21.

The feedback information transmission apparatus 900 shown in FIG. 20 or the feedback information transmission apparatus 1000 shown in FIG. 21 can implement steps performed by the first terminal device in the method 300 and the method 400 and the embodiments shown in FIG. 5 to FIG. 7, FIG. 9, FIG. 11, and FIG. 13 to FIG. 15. For similar descriptions, refer to the descriptions in the foregoing corresponding method. To avoid repetition, details are not described herein again.

It should be further understood that the foregoing apparatus may be a network device, or may be a terminal, or may be a chip used in a network device or a terminal, or another combined device, component, or the like that has a function of the foregoing network device or terminal.

When the apparatus is a network device or a terminal, the receiving module may be a receiver, and may include an antenna, a radio frequency circuit, and the like, the processing module may be a processor, for example, may be a baseband processor, and the sending module may be a transmitter, and may include an antenna, a radio frequency circuit, and the like. The receiver and the transmitter may be an integrated transceiver.

When the apparatus is a component having functions of the foregoing network device or terminal, the receiving module may be a radio frequency unit, the processing module may be a processor, and the sending module may be a radio frequency unit.

When the apparatus is a chip system, the receiving module may be an input interface of the chip system, the processing module may be a processor of the chip system, for example, a central processing unit (central processing unit, CPU), and the sending module may be an output interface of the chip system.

It should be further understood that division into the units in the apparatus is merely logical function division. In an actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be an independently disposed processing element, or may be integrated into a chip of the apparatus for implementation. Alternatively, each unit may be stored in a memory in a form of a program to be invoked by a processing element of the apparatus to perform a function of the unit. The processing element herein may also be referred to as a processor, and may be an integrated circuit having a signal processing capability. In an implementation process, the steps in the foregoing methods or the foregoing units may be implemented by using a hardware integrated logic circuit in the processing element, or may be implemented in a form of software invoked by the processing element.

In an example, a unit in any one of the foregoing apparatuses may be one or more integrated circuits configured to implement the foregoing methods, for example, one or more application-specific integrated circuits (application specific integrated circuit, ASIC), one or more digital signal processors (digital signal processor, DSP), one or more field programmable gate arrays (field programmable gate array, FPGA), or a combination of at least two of these integrated circuits. For another example, when the unit in the apparatus is implemented by scheduling a program by a processing element, the processing element may be a general purpose processor, for example, a central processing unit (central processing unit, CPU) or another processor that can invoke the program. For still another example, the units may be integrated and implemented in a form of a system-on-a-chip (system-on-a-chip, SOC).

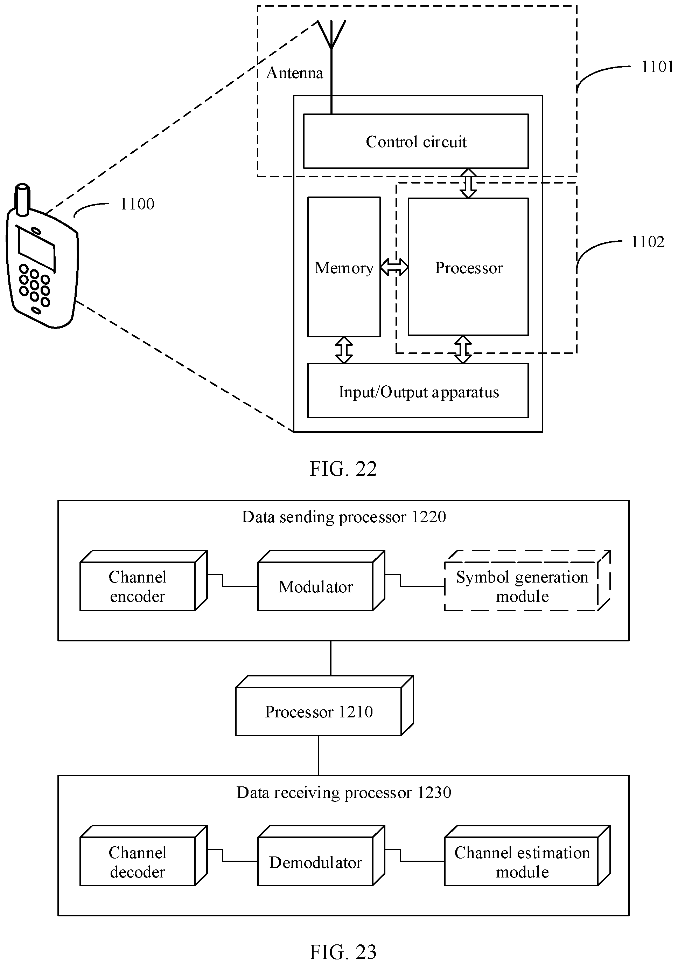

FIG. 22 is a schematic structural diagram of a terminal device 1100 according to this application. The apparatuses 500 and 600, or the apparatuses 900 and 1000 may be configured in the terminal device 1100. Alternatively, the apparatuses 500 and 600, or the apparatuses 900 and 1000 may be the terminal device 1100. In other words, the terminal device 1100 may perform actions performed by the first terminal device in the method 200 to the method 400.

For ease of description, FIG. 22 shows only main components of the terminal device. As shown in FIG. 22, the terminal device 1100 includes a processor, a memory, a control circuit, an antenna, and an input/output apparatus.

The processor is mainly configured to: process a communication protocol and communication data, control the entire terminal device, execute a software program, and process data of the software program, for example, is configured to support the terminal device in performing the actions described in the foregoing embodiments of the method for transmitting a precoding matrix indicator. The memory is mainly configured to store the software program and the data, for example, store the codebook described in the foregoing embodiments. The control circuit is mainly configured to perform conversion between a baseband signal and a radio frequency signal, and process the radio frequency signal. A combination of the control circuit and the antenna may also be referred to as a transceiver that is mainly configured to receive/send a radio frequency signal in a form of an electromagnetic wave. The input/output apparatus such as a touchscreen, a display, or a keyboard is mainly configured to receive data entered by a user and output data to the user.

After the terminal device is powered on, the processor may read a software program in a storage unit, explain and execute instructions of the software program, and process data of the software program. When data needs to be sent in a wireless manner, after performing baseband processing on the to-be-sent data, the processor outputs a baseband signal to a radio frequency circuit. After performing radio frequency processing on the baseband signal, the radio frequency circuit sends a radio frequency signal to the outside through the antenna in an electromagnetic wave form. When data is sent to the terminal device, the radio frequency circuit receives a radio frequency signal through the antenna, converts the radio frequency signal into a baseband signal, and outputs the baseband signal to the processor and the processor converts the baseband signal into data, and processes the data.

A person skilled in the art may understand that, for ease of description, FIG. 22 shows only one memory and one processor. An actual terminal device may have a plurality of processors and a plurality of memories. The memory may also be referred to as a storage medium, a storage device, or the like. This is not limited in the embodiments of this application.

For example, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 22 integrates functions of the baseband processor and the central processing unit. A person skilled in the art may understand that the baseband processor and the central processing unit may be alternatively processors independent of each other, and are interconnected by using a technology such as a bus. A person skilled in the art may understand that the terminal device may include a plurality of baseband processors to adapt to different network standards, the terminal device may include a plurality of central processing units to improve a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communications protocol and the communication data may be built in the processor, or may be stored in the storage unit in a form of a software program. The processor executes the software program to implement a baseband processing function.

For example, in this embodiment of this application, the antenna and the control circuit that have a transceiver function may be considered as a transceiver unit 1101 of the terminal device 1100, and the processor having a processing function may be considered as a processing unit 1102 of the terminal 1100. As shown in FIG. 22, the terminal device 1100 includes a transceiver unit 1101 and a processing unit 1102. The transceiver unit may also be referred to as a transceiver, a transceiver machine, a transceiver apparatus, or the like. Optionally, a component that is in the transceiver unit 1101 and that is configured to implement a receiving function may be considered as a receiving unit, and a component that is in the transceiver unit 1101 and that is configured to implement a sending function may be considered as a sending unit. In other words, the transceiver unit 1101 includes the receiving unit and the sending unit. For example, the receiving unit may also be referred to as a receiver machine, a receiver, a receive circuit, or the like, and the sending unit may be referred to as a transmitter machine, a transmitter, a transmit circuit, or the like.

FIG. 23 is a schematic structural diagram of another terminal device 1200 according to this application. In FIG. 23, the terminal device includes a processor 1210, a data sending processor 1220, and a data receiving processor 1230. The processing unit in the foregoing embodiment may be the processor 1210 in FIG. 13, and completes a corresponding function. The transceiver unit in the foregoing embodiment may be the data sending processor 1220 and/or the data receiving processor 1230 in FIG. 23. Although FIG. 23 shows a channel encoder and a channel decoder, it may be understood that the modules do not constitute a limitation on this embodiment, and are merely examples.

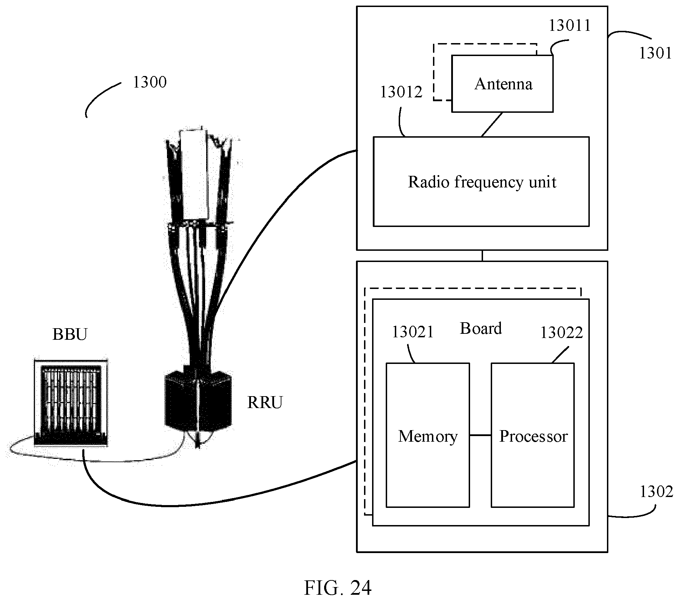

FIG. 24 is a schematic structural diagram of a network device 1300 according to an embodiment of this application. The network device 1300 may be configured to implement functions of the network device in the foregoing method. The network device 1300 includes one or more radio frequency units, such as a remote radio unit (remote radio unit, RRU) 1301 and one or more baseband units (baseband unit, BBU) (which may also be referred to as a digital unit, digital unit, DU) 1302. The RRU 1301 may be referred to as a transceiver unit, a transceiver machine, a transceiver circuit, a transceiver, or the like, and may include at least one antenna 13011 and a radio frequency unit 13012. The RRU 1301 is mainly configured to perform receiving and sending of a radio frequency signal and conversion between a radio frequency signal and a baseband signal, for example, send the signaling message in the foregoing embodiment to a terminal device. The BBU 1302 is mainly configured to: perform baseband processing, control the base station, and so on. The RRU 1301 and the BBU 1302 may be physically disposed together, or may be physically disposed separately, to be specific, in a distributed base station.

The BBU 1302 is a control center of the base station, or may be referred to as a processing unit, and is mainly configured to complete baseband processing functions such as channel coding, multiplexing, modulation, and spectrum spreading. For example, the BBU (the processing unit) 1302 may be configured to control the base station 130 to perform an operation procedure related to the network device in the foregoing method embodiment.

In an example, the BBU 1302 may include one or more boards, and a plurality of boards may together support a radio access network (for example, an LTE system, or a 5G system) of a single access standard, or may separately support radio access networks of different access standards. The BBU 1302 further includes a memory 13021 and a processor 13022. The memory 13021 is configured to store instructions and data that are necessary. For example, the memory 13021 stores the codebook and the like in the foregoing embodiments. The processor 13022 is configured to control the base station to perform a necessary action, for example, is configured to control the base station to perform an operation procedure related to the network device in the foregoing method embodiments. The memory 13021 and the processor 13022 may serve one or more boards. In other words, a memory and a processor may be independently disposed on each board, or a plurality of boards may share a same memory and a same processor. In addition, a necessary circuit may further be disposed on each board.

In a possible implementation, with development of a system-on-chip (System-on-chip, SoC) technology, all or some functions of the components 1302 and 1301 may be implemented by using the SoC technology, for example, implemented by using one base station function chip. The base station function chip integrates components such as a processor, a memory, and an antenna port. A program of a base station-related function is stored in the memory. The processor executes the program to implement the base station-related function. Optionally, the base station function chip can also read a memory outside the chip to implement the base station-related function.

It should be understood that a structure of the network device shown in FIG. 24 is merely a possible form, and should not constitute any limitation on this embodiment of this application. In this application, there may be a base station structure in another form in the future.

It should be understood that in the embodiments of this application, the processor may be a central processing unit (central processing unit, CPU), or the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like.

It may be understood that the memory in the embodiments of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of random access memories (random access memory, RAM) may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM)

All or some of the foregoing embodiments may be implemented by software, hardware, firmware, or any combination thereof. When software is used to implement the embodiments, all or some of the foregoing embodiments may be implemented in a form of a computer program product. The computer program product includes one or more computer instructions or computer programs. When the computer instructions or the computer programs are loaded and executed on a computer, the procedure or function according to the embodiments of this application is all or partially generated. The computer may be a general-purpose computer, a special-purpose computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, infrared, radio, or microwave) manner. The computer-readable storage medium may be any usable medium accessible by the computer, or a data storage device, such as a server or a data center, integrating one or more usable medium sets. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a communications system. The communications system includes the foregoing first terminal device and the foregoing network device. Optionally, the communications system may further include at least one other terminal device. The first terminal device may send sidelink data to the at least one other terminal device.

An embodiment of this application further provides a computer-readable medium, configured to store computer program code. The computer program includes instructions used to perform the feedback information transmission method in the embodiments of this application in the foregoing methods 200 to 400. The readable medium may be a read-only memory (read-only memory, ROM) or a random access memory (random access memory, RAM). This is not limited in this embodiment of this application.

This application further provides a computer program product. The computer program product includes instructions. When the instructions are executed, a terminal device and a network device that have a simple capability are enabled to respectively perform operations corresponding to the first terminal device and the network device in the foregoing method.

An embodiment of this application further provides a system chip. The system chip includes a processing unit and a communications unit. The processing unit may be, for example, a processor, and the communications unit may be, for example, an input/output interface, a pin, or a circuit. The processing unit may execute computer instructions, so that a chip in a communications apparatus performs any feedback information transmission method provided in the foregoing embodiments of this application.

Optionally, any communications apparatus provided in the foregoing embodiments of this application may include the system chip.

Optionally, the computer instruction is stored in a storage unit.

Optionally, the storage unit is a storage unit inside the chip, such as a register or a cache. Alternatively, the storage unit may be a storage unit that is inside the terminal and that is located outside the chip, such as a ROM, another type of static storage device that can store static information and instructions, or a RAM. Any processor mentioned above may be a CPU, a microprocessor, an ASIC, or one or more integrated circuits for controlling program execution of the foregoing feedback information transmission method. The processing unit and the storage unit may be decoupled, are separately disposed on different physical devices, and are connected in a wired or wireless manner to implement respective functions of the processing unit and the storage unit, to support the system chip in implementing various functions in the foregoing embodiments. Alternatively, the processing unit and the memory may be coupled to a same device.

It may be understood that the memory in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of random access memories (random access memory, RAM) may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM)

Terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

The terms "uplink" and "downlink" in this application are used to describe a data/information transmission direction in a specific scenario. For example, an "uplink" direction is usually a direction in which data/information is transmitted from a terminal to a network side, or a direction in which data/information is transmitted from a distributed unit to a centralized unit, and a "downlink" direction is usually a direction in which data/information is transmitted from a network side to a terminal, or a direction in which data/information is transmitted from a centralized unit to a distributed unit. It may be understood that the "uplink" and the "downlink" are only used to describe transmission directions of data/information, and neither a specific start device nor a specific end device of the data/information transmission is limited.

Names may be assigned to various objects that may appear in this application, for example, various messages/information/devices/network elements/systems/apparatuses/actions/operations/procedures/concepts. It may be understood that these specific names do not constitute a limitation on the related objects, and the assigned names may change with a factor such as a scenario, a context, or a use habit. Technical meanings of technical terms in this application should be understood and determined mainly based on functions and technical effects that are of the technical terms and that are reflected/performed in the technical solutions.

A person of ordinary skill in the art may be aware that units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that such an implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the prior art, or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes: a USB flash drive, a removable hard disk, a read-only memory (read-only memory, ROM), and a random access memory.

A person of ordinary skill in the art may be aware that units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that such an implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments, and details are not described herein again.

In the several embodiments provided in this application, it should be understood that the disclosed system, apparatus, and method may be implemented in other manners. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the prior art, or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A feedback information transmission method, comprising:
obtaining, by a first terminal device, a first resource used to transmit a sidelink HARQ and a second resource used to transmit a downlink HARQ, wherein the sidelink HARQ is a HARQ corresponding to sidelink data sent by the first terminal device, and the downlink HARQ is a HARQ corresponding to downlink data that is received by the first terminal device from a network device; and
when the first resource and the second resource overlap in time domain, sending, by the first terminal device, feedback information to the network device on a third resource based on a priority of the sidelink HARQ and a first threshold, wherein the feedback information comprises the sidelink HARQ and/or the downlink HARQ, and the third resource is determined based on the first resource and the second resource.

2. The method according to claim 1, wherein the priority of the sidelink HARQ is:
a priority of a transmission resource of the sidelink HARQ, or a priority of sidelink data corresponding to the sidelink HARQ.

3. The method according to claim 1 or 2, wherein
when there are a plurality of pieces of data corresponding to the sidelink HARQ, the priority of the sidelink HARQ is a priority of data with a highest priority in the plurality of pieces of data.

4. The method according to any one of claims 1 to 3, wherein the method further comprises:
determining, by the first terminal device, the first threshold from at least one threshold based on a service type of the downlink data, wherein the at least one threshold corresponds to different service types.

5. The method according to any one of claims 1 to 4, wherein the sending, by the first terminal device, feedback information to the network device on a third resource based on a priority of the sidelink HARQ and a first threshold comprises:
when the priority of the sidelink HARQ is less than or equal to the first threshold, sending, by the first terminal device, only the downlink HARQ to the network device on the third resource; or
when the priority of the sidelink HARQ is greater than the first threshold, sending, by the first terminal device, only the sidelink HARQ to the network device on the third resource.

6. The method according to any one of claims 1 to 4, wherein the sending, by the first terminal device, feedback information to the network device on a third resource based on a priority of the sidelink HARQ and a first threshold comprises:
when the priority of the sidelink HARQ is greater than the first threshold, sending, by the first terminal device, the sidelink HARQ and the downlink HARQ to the network device on the third resource; or
when the priority of the sidelink HARQ is less than or equal to the first threshold, sending, by the first terminal device, only the downlink HARQ to the network device on the third resource.

7. A feedback information transmission method, comprising:
determining a first resource used to transmit a sidelink HARQ and a second resource used to transmit a downlink HARQ, wherein the sidelink HARQ is a HARQ corresponding to sidelink data sent by a first terminal device, and the downlink HARQ is a HARQ corresponding to downlink data sent by a network device to the first terminal device; and
when the first resource and the second resource overlap in time domain, receiving feedback information from the first terminal device on a third resource, wherein the feedback information comprises the sidelink HARQ and/or the downlink HARQ, the feedback information is determined based on a priority of the sidelink HARQ and a first threshold, and the third resource is determined based on the first resource and the second resource.

8. The method according to claim 7, wherein the priority of the sidelink HARQ is:
a priority of a transmission resource of the sidelink HARQ, or a priority of sidelink data corresponding to the sidelink HARQ.

9. The method according to claim 7 or 8, wherein
when there are a plurality of pieces of data corresponding to the sidelink HARQ, the priority of the sidelink HARQ is a priority of data with a highest priority in the plurality of pieces of data.

10. The method according to any one of claims 7 to 9, wherein the first threshold is determined from at least one threshold based on a service type of the downlink data, and the at least one threshold corresponds to different service types.

11. The method according to any one of claims 7 to 10, wherein
when the priority of the sidelink HARQ is less than or equal to the first threshold, the feedback information comprises only the downlink HARQ; or
when the priority of the sidelink HARQ is greater than the first threshold, the feedback information comprises only the sidelink HARQ.

12. The method according to any one of claims 7 to 11, wherein
when the priority of the sidelink HARQ is greater than the first threshold, the feedback information comprises the sidelink HARQ and the downlink HARQ; or
when the priority of the sidelink HARQ is less than or equal to the first threshold, the feedback information comprises only the sidelink HARQ.

13. A feedback information transmission apparatus, comprising:
a processing unit, configured to obtain a first resource used to transmit a sidelink HARQ and a second resource used to transmit a downlink HARQ, wherein the sidelink HARQ is a HARQ corresponding to sidelink data sent by a first terminal device, and the downlink HARQ is a HARQ corresponding to downlink data that is received by the first terminal device from a network device; and
a transceiver unit, configured to: when the first resource and the second resource overlap in time domain, send feedback information to the network device on a third resource based on a priority of the sidelink HARQ and a first threshold, wherein the feedback information comprises the sidelink HARQ and/or the downlink HARQ, and the third resource is determined based on the first resource and the second resource.

14. The apparatus according to claim 13, wherein the priority of the sidelink HARQ is:
a priority of a transmission resource of the sidelink HARQ, or a priority of sidelink data corresponding to the sidelink HARQ.

15. The apparatus according to claim 13 or 14, wherein
when there are a plurality of pieces of data corresponding to the sidelink HARQ, the priority of the sidelink HARQ is a priority of data with a highest priority in the plurality of pieces of data.

16. The apparatus according to any one of claims 13 to 15, wherein
the processing unit is further configured to determine the first threshold from at least one threshold based on a service type of the downlink data, wherein the at least one threshold corresponds to different service types.

17. The apparatus according to any one of claims 13 to 16, wherein
when the priority of the sidelink HARQ is less than or equal to the first threshold, the transceiver unit is further configured to send only the downlink HARQ to the network device on the third resource; or
when the priority of the sidelink HARQ is greater than the first threshold, the transceiver unit is further configured to send only the sidelink HARQ to the network device on the third resource.

18. The apparatus according to any one of claims 13 to 16, wherein
when the priority of the sidelink HARQ is greater than the first threshold, the transceiver unit is further configured to send the sidelink HARQ and the downlink HARQ to the network device on the third resource; or
when the priority of the sidelink HARQ is less than or equal to the first threshold, the transceiver unit is further configured to send only the downlink HARQ to the network device on the third resource.

19. A feedback information transmission apparatus, comprising:
a processing unit, configured to determine a first resource used to transmit a sidelink HARQ and a second resource used to transmit a downlink HARQ, wherein the sidelink HARQ is a HARQ corresponding to sidelink data sent by a first terminal device, and the downlink HARQ is a HARQ corresponding to downlink data sent by a network device to the first terminal device; and
a transceiver unit, configured to: when the first resource and the second resource overlap in time domain, receive feedback information from the first terminal device on a third resource, wherein the feedback information comprises the sidelink HARQ and/or the downlink HARQ, the feedback information is determined based on a priority of the sidelink HARQ and a first threshold, and the third resource is determined based on the first resource and the second resource.

20. The apparatus according to claim 19, wherein the priority of the sidelink HARQ is:
a priority of a transmission resource of the sidelink HARQ, or a priority of sidelink data corresponding to the sidelink HARQ.

21. The apparatus according to claim 19 or 20, wherein
when there are a plurality of pieces of data corresponding to the sidelink HARQ, the priority of the sidelink HARQ is a priority of data with a highest priority in the plurality of pieces of data.

22. The apparatus according to any one of claims 19 to 21, wherein the first threshold is determined from at least one threshold based on a service type of the downlink data, and the at least one threshold corresponds to different service types.

23. The apparatus according to any one of claims 19 to 22, wherein
when the priority of the sidelink HARQ is less than or equal to the first threshold, the feedback information comprises only the downlink HARQ; or
when the priority of the sidelink HARQ is greater than the first threshold, the feedback information comprises only the sidelink HARQ.

24. The apparatus according to any one of claims 19 to 22, wherein
when the priority of the sidelink HARQ is greater than the first threshold, the feedback information comprises the sidelink HARQ and the downlink HARQ; or
when the priority of the sidelink HARQ is less than or equal to the first threshold, the feedback information comprises only the sidelink HARQ.

25. A feedback information transmission apparatus, wherein the apparatus comprises at least one processor, and the at least one processor is coupled to at least one memory; and
the at least one processor is configured to execute a computer program or instructions stored in the at least one memory, so that the apparatus performs the method according to any one of claims 1 to 6 or the method according to any one of claims 7 to 12.

26. A computer-readable storage medium, wherein the computer-readable storage medium stores a computer program or instructions, and when a computer reads and executes the computer program or the instructions, the computer is enabled to perform the method according to any one of claims 1 to 6 or the method according to any one of claims 7 to 12.

27. A chip, comprising a processor, configured to invoke a computer program or instructions from a memory and run the computer program or the instructions, so that a communications device in which the chip is installed performs the method according to any one of claims 1 to 6 or the method according to any one of claims 7 to 12.
